(19) Europäisches Patentamt
European Patent Office
Office européen des brevets

(11) **EP 3 329 609 B1**

(12) **FASCICULE DE BREVET EUROPEEN**

(45) Date de publication et mention de la délivrance du brevet:
**08.05.2019 Bulletin 2019/19**

(21) Numéro de dépôt: **16757282.5**

(22) Date de dépôt: **19.07.2016**

(51) Int Cl.:
*H04B 7/06* (2006.01)  *H04B 7/0413* (2017.01)

(86) Numéro de dépôt international:
**PCT/FR2016/051855**

(87) Numéro de publication internationale:
**WO 2017/017344 (02.02.2017 Gazette 2017/05)**

(54) **PROCÉDÉ DE TRAITEMENT D'INFORMATIONS REPRÉSENTATIVES D'UN CANAL DE TRANSMISSION PAR UN ÉQUIPEMENT RADIO, DISPOSITIF, ÉQUIPEMENT RÉCEPTEUR ET PROGRAMME D'ORDINATEUR ASSOCIÉ**

VERFAHREN ZUR VERARBEITUNG VON INFORMATIONEN ZUR DARSTELLUNG EINES KANALS ZUR ÜBERTRAGUNG DURCH EIN FUNKSYSTEM, ZUGEHÖRIGE VORRICHTUNG, EMPFÄNGERSYSTEM UND COMPUTERPROGRAMM

METHOD FOR PROCESSING INFORMATION REPRESENTING A CHANNEL FOR TRANSMISSION BY A RADIO SYSTEM, ASSOCIATED DEVICE, RECEIVER SYSTEM AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2015 FR 1557184**

(43) Date de publication de la demande:
**06.06.2018 Bulletin 2018/23**

(73) Titulaire: **B<>COM**
**35510 Cesson-Sévigné (FR)**

(72) Inventeurs:
• **PAQUELET, Stéphane**
**35700 Rennes (FR)**
• **BONNEFOI, Rémi**
**35700 Rennes (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
• **CHEN T-A ET AL: "On the Design of MIMO Block-Fading Channels With Feedback-Link Capacity Constraint", IEEE TRANSACTIONS ON COMMUNICATIONS, IEEE SERVICE CENTER, PISCATAWAY, NJ. USA, vol. 52, no. 1, 1 janvier 2004 (2004-01-01), pages 62-70, XP011106837, ISSN: 0090-6778, DOI: 10.1109/TCOMM.2003.822171**
• **WANG HENGZHI ET AL: "On the design of hybrid limited feedback for massive MIMO systems", 2014 IEEE INTERNATIONAL CONFERENCE ON COMMUNICATIONS (ICC), IEEE, 10 juin 2014 (2014-06-10), pages 4795-4800, XP032632384, DOI: 10.1109/ICC.2014.6884079**

**Description**

**1. Domaine de l'invention**

Le domaine de l'invention est celui des systèmes de communication radio de type MIMO (pour « Multi Input Multi Output », en anglais) et en particulier la remontée par un équipement récepteur à un équipement émetteur d'informations représentatives du canal de transmission.

L'invention peut notamment, mais non exclusivement, s'appliquer au pré-codage des antennes de l'équipement émetteur pour optimiser la capacité du canal de transmission.

**2. Présentation de l'art antérieur**

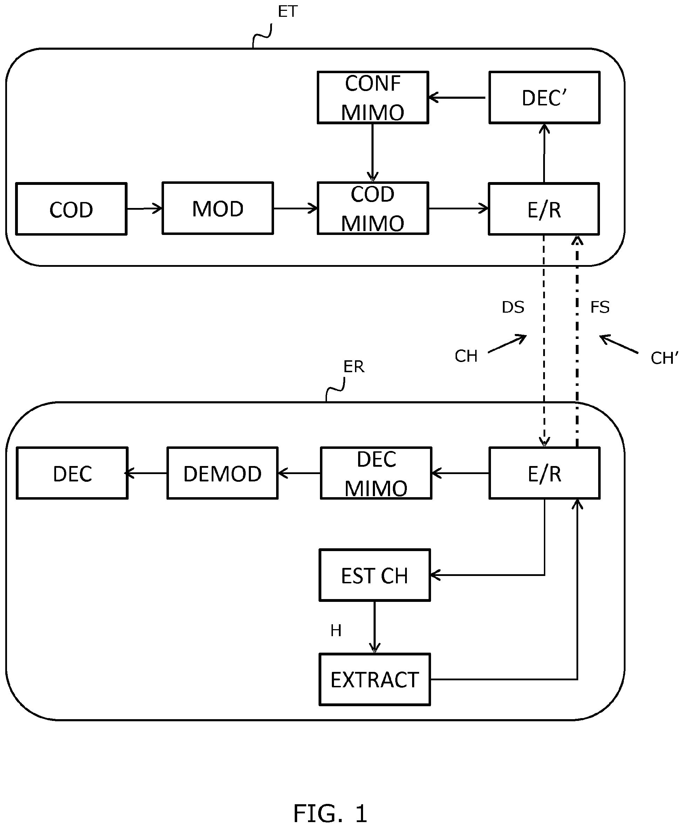

En relation avec la Figure **1**, on considère un schéma d'une chaîne de transmission d'informations entre un équipement radio émetteur comprenant une pluralité d'antennes d'émission et un équipement radio récepteur comprenant une pluralité d'antennes de réception, selon l'art antérieur.

Codage de canal :

Les informations utiles à transmettre sont d'abord soumises à un codage de canal au cours duquel diverses opérations (ajout de redondance, entrelacement, scrambling) sont effectuées sur les bits d'information pour rendre plus robuste la transmission. Une fois les symboles reçus, le décodeur pourra utiliser le codage de canal pour corriger les erreurs dues au canal.

Modulation :

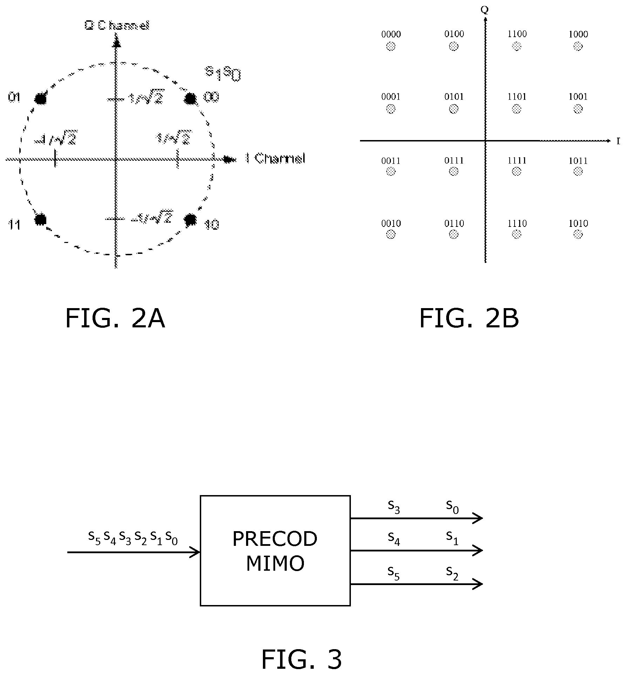

La séquence de bits codée subit ensuite une modulation. A chaque séquence de N bits codés on associe un symbole complexe. Par exemple pour une QPSK on a le schéma de modulation présenté en relation avec la Figure **2A.**
Dans ce cas-là, à chaque séquence de 2 bits codés on associe une valeur complexe différente

$$00 \rightarrow \frac{1}{\sqrt{2}} + \frac{1}{\sqrt{2}}i$$

$$01 \rightarrow -\frac{1}{\sqrt{2}} + \frac{1}{\sqrt{2}}i$$

$$10 \rightarrow \frac{1}{\sqrt{2}} - \frac{1}{\sqrt{2}}i$$

$$11 \rightarrow -\frac{1}{\sqrt{2}} - \frac{1}{\sqrt{2}}i$$

Dans le cadre de modulations plus complexes, le nombre de bits par symbole augmente, comme c'est le cas par exemple pour une 16-QAM présentée en relation avec la Figure **2B**.

Précodage :

Ce bloc est spécifique à l'utilisation de plusieurs antennes. Son objectif est de répartir les symboles sur les différentes antennes pour obtenir une focalisation de la puissance transmise sur un réseau d'antennes privilégié et limiter les interférences. Cette répartition peut se faire à partir de précodeurs ou de codes espace-temps.
Lors de l'utilisation des codes espace-temps, un même symbole peut être envoyé plusieurs fois. Une loi définit les instants et les antennes d'émission du symbole. Le schéma le plus utilisé aujourd'hui est celui décrit par Alamouti dans un article intitulé "A simple transmit diversity technique for wireless communications", publié en Octobre 1998, dans la revue. IEEE Journal on Selected Areas in Communications, 16 (8): 1451-1458, qui ne s'applique que lorsque le nombre d'antennes à l'émission et à la réception est égal à 2.

Les précodeurs permettent de répartir un flux de symboles sur l'ensemble des antennes d'émission. Il est possible de paralléliser les flux comme illustré par l'exemple de la figure 3, sur laquelle on a représenté la répartition de symboles sur trois flux. A chaque flux est attribuée une proportion de la puissance totale. Les flux sont ensuite multipliés par des vecteurs de taille t, qui sont les précodeurs et qui répartissent les différents flux sur les t antennes.

Décodage MIMO/ Démodulation/ Décodage de canal :

Ces différents blocs opèrent les traitements qui permettent de retrouver les bits utiles. Leur objectif est donc de réaliser l'inverse des opérations faites avant l'émission des symboles et de corriger les erreurs générées par le canal.

Estimation de canal :

Parmi les symboles envoyés par l'émetteur, certains sont des symboles pilotes. Ces blocs pilotes sont connus par l'émetteur et le récepteur ce qui permet d'estimer le canal à partir des modifications qu'ils ont subies.

Cette estimation du canal a deux objectifs :

- Le récepteur peut utiliser cette connaissance du canal pour diminuer les effets de celui-ci sur les données reçues
- Il peut aussi renvoyer vers l'émetteur une information sur cette matrice qui permettra d'adapter le précodage à la forme du canal.

On notera que la norme 3GPP LTE (pour « Long Term Evolution », en anglais) se base sur un alphabet (« codebook », en anglais) contenant un petit nombre de précodeurs, comme décrit dans l'article de Lee et al, intitulé "MIMO technologies in 3GPP LTE and LTE-advanced," et publié dans la revue « EURASIP Journal on Wireless Communications and Networking «, en 2009 et que de nombreux travaux sur le précodage, comme par exemple celui de A. Wiesel, Y. C. Eldar, and S. Shamai (Shitz), intitulé "Zero-forcing precoding and generalized inverses," et publié dans les proceedings de la conférence IEEE Trans. on Sig. Proc., vol. 56, no. 9, pp. 4409-4418, en septembre 2008, cherchent avant tout à réduire les interférences (zéro-forcing precoding) ce qui permet d'obtenir des précodeurs efficaces mais complexes, car leur calcul nécessite l'inversion d'une matrice.

On connait du document de B. C Banister et al, intitulé « Feedback Assisted Transmission Subspace Tracking for MIMO systems », publié en avril 2003 dans la revue IEEE J. Select. Areas Commun., vol. 21, no 3, pp. 452-463, une méthode de caractérisation du canal de transmission dans le sens descendant entre un équipement émetteur comprenant une pluralité d'antennes d'émission et un équipement récepteur comprenant une pluralité d'antennes de réception. Cette méthode repose sur l'extraction des vecteurs propres d'une matrice H*H obtenue par produit du transconjugué, c'est-à-dire la transposée de la matrice de canal H, dans laquelle tous les coefficients sont conjugués, noté H* par elle-même. Elle met en oeuvre un algorithme dit du gradient qui nécessite plusieurs estimations de canal successives pour converger. De cette manière, elle détermine le sous-espace vectoriel dans lequel l'équipement récepteur a reçu de l'information de l'équipement émetteur et donc les directions dans lesquelles l'équipement émetteur doit émettre de la puissance pour optimiser la capacité du canal de transmission. Les vecteurs propres obtenus sont transmis à l'équipement émetteur dans un signal de retour (pour « feedback », en anglais).

On connait de l'article intitulé « On the Design of MIMO Block-Fading Channels With Feedback-Link Capacity Constraint, par V. Lau et al, publié dans la revue IEEE Transactions on Communications, vol.52, en janvier 2004, une méthode de calcul des valeurs propres d'une matrice d'autocorrélation de symboles à l'émission et de transmission, par un équipement récepteur d'un signal de retour comprenant au moins une information représentative des valeurs propres calculées et de leurs vecteurs propres associés, qui satisfait une contrainte de capacité du canal de retour. Par exemple, cette information comprend un indice auquel l'équipement émetteur fait correspondre des couples de valeurs propres et vecteurs propres préenregistrés. Cette méthode s'appuie sur une connaissance de propriétés statistiques du canal de transmission.

On connait de l'article intitulé « On the Design of Hybrid Limited Feedback for Massive MIMO Systems », par H. Wang et al, publié dans les proceedings de la conférence IEEE ICC Wireless Communications Symposium, en 2014, une autre méthode de calcul des valeurs propres d'une matrice d'autocorrélation de symboles à l'émission et de transmission d'un signal de retour comprenant au moins une partie des valeurs propres calculées et de leurs vecteurs propres associés et qui satisfait une contrainte de capacité du canal de retour,

### 3. Inconvénients de l'art antérieur

Un inconvénient, communs aux trois méthodes décrites est qu'elles sont complexes à mettre en oeuvre et nécessitent des ressources de calcul importantes, du fait qu'elles cherchent à déterminer tous les vecteurs propres et valeurs propres d'une matrice H*H dont les dimensions txt sont potentielles grandes dans un contexte de communication MIMO. En effet, le nombre d'antennes d'émission t peut être égal à 16,32, 64 ou 128 dans un contexte massivement MIMO.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution de caractérisation du canal et de configuration du précodage MIMO qui permette effectivement à l'émetteur de maximiser la capacité du canal, tout en gardant une complexité de calcul raisonnable pour le récepteur.

### 5. Exposé de l'invention

Ces objectifs, ainsi que d'autres qui apparaîtront par la suite, sont atteints à l'aide d'un procédé de traitement d'informations représentatives d'un canal de transmission entre un équipement radio, dit récepteur (ER), comprenant une pluralité (r) d'antennes de réception et au moins une antenne d'émission, et un équipement radio, dit émetteur (ET), comprenant une pluralité (t) d'antennes d'émission et au moins une antenne de réception, le nombre d'antennes d'émission (t) étant supérieur au nombre d'antennes de réception (r), lesdites informations comprenant une matrice (H) représentative du canal de transmission (CH) préalablement estimée à partir d'au moins un signal de données reçu, ledit procédé comprenant une étape d'obtention de caractéristiques propres du produit du transconjugué de la matrice de canal avec la matrice de canal, comprenant des valeurs propres non nulles et des vecteurs propres associés auxdites valeurs propres, caractérisé en ce qu'il comprend en outre les étapes suivantes :

- Obtention d'une mesure d'un rapport signal à bruit dans le canal de transmission ;
- Calcul d'au moins une valeur propre d'une matrice d'autocorrélation des symboles à l'émission, selon un critère de maximisation d'une capacité du canal de transmission, à partir des (p) valeurs propres obtenues, rangées selon un ordre décroissant et de la mesure ($\rho$) de rapport signal à bruit, selon les équations suivantes :

$$0 \leq p \leq argmax_{m \leq r} \, m^{-1} \left( 1 + (rt\rho)^{-1} \sum_{k \leq m} \lambda_k^{-1} \right) > \left( rt\rho\lambda_m \right)^{-1}$$

$$\mu_i = \frac{1}{p} \left( 1 + \sum_{j=1}^{p} \frac{1}{rt\rho\lambda_j} \right) - \frac{1}{rt\rho\lambda_i}$$

pour $1 \leq i \leq p$

$$\mu_i = 0,$$

pour $p < i \leq t$ la valeur propre ($\mu_i$) non nulle de la matrice d'autocorrélation ($Q_{opt}$) étant associée au même vecteur propre ($u_i$) que la valeur propre ($\lambda_i$) du produit du transconjugué de la matrice de canal avec la matrice de canal (H*H) ;
- Transmission d'informations représentatives de ladite au moins une valeur propre non nulle calculée associé au vecteur propre.

L'invention permet de calculer et de transmettre des caractéristiques propres de la matrice d'autocorrélation des symboles à l'émission qui maximise la capacité du canal de transmission.

L'invention propose ainsi une approche tout à fait nouvelle et inventive du précodage MIMO qui consiste à exploiter la connaissance d'au moins une partie des valeurs propres du canal de transmission pour calculer un nombre limité p, avec p≤min(r,t), de valeurs propres de la matrice d'autocorrélation de symboles à l'émission, qui contribue à maximiser la capacité du canal de transmission. Elle transmet ensuite à l'équipement émetteur des informations représentative de ces valeurs propres, qu'il peut exploiter directement pour configurer son précodeur MIMO et optimiser le canal de transmission.

Selon un aspect de l'invention, le procédé comprend en outre une étape d'extraction d'au moins un couple de caractéristiques propres du produit de la matrice de canal avec le transconjugué de la matrice de canal à partir de la matrice de canal estimée, ledit au moins un couple comprenant au moins une valeur propre non nulle et un vecteur propre associé et, les valeurs propres non nulles du produit du transconjugué de la matrice de canal par la matrice de canal (H*H) étant identiques à celle du produit de la matrice de canal avec son transconjugué (HH*), ledit au moins un vecteur propre du produit du transconjugué de la matrice de canal par la matrice de canal est obtenu en effectuant le produit du vecteur propre associé à la au moins une valeur propre extraite du produit de la matrice de canal par son transconjugué (HH*) avec le transconjugué (H*) de la matrice de canal.

Les inventeurs ont réussi à expliciter une relation entre la matrice HH* et la matrice H*H, qui permet de dériver les caractéristiques propres de l'une et celle de l'autre. L'invention propose donc de calculer les caractéristiques propres de la matrice HH* qui est de dimension inférieure à la matrice H*H et ainsi de réduire la complexité du traitement à réaliser au niveau de l'équipement récepteur. L'économie de ressources permise par l'invention est d'autant plus importante que le rapport entre le nombre d'antennes à l'émission et le nombre d'antennes à la réception est plus grand.

Selon une caractéristique avantageuse de l'invention, l'étape d'extraction des valeurs propres du produit de la matrice de canal par son transconjugué extrait les valeurs propres selon un ordre de valeurs décroissantes et comprend les sous-étapes suivantes :

- Extraction d'un couple comprenant la valeur propre de plus grande amplitude et son vecteur propre associé, par itérations successives du produit de la matrice de canal par son transconjugué avec un vecteur initial de dimension égale au nombre d'antennes de réception, les itérations étant répétées jusqu'à ce qu'il y ait convergence vers une direction propre du canal de transmission ;

- Obtention d'une nouvelle matrice (HH*)$_1$ par soustraction d'un produit du couple extrait au produit de la matrice de canal par son transconjugué;

et en ce que lesdites sous-étapes sont répétées pour la nouvelle matrice, tant qu'un critère d'arrêt prédéterminé n'est pas satisfait

Avec l'invention, la valeur propre de plus grande amplitude et son vecteur propre associé sont extraits de la matrice HH* par une méthode itérative, dite « Power method ». Le vecteur initial est par exemple choisi de façon aléatoire. Une méthode de déflation permet ensuite d'obtenir de façon successive les valeurs propres selon un ordre de valeurs décroissantes. La matrice issue de la soustraction a pour valeur propre de plus grande amplitude la valeur propre suivante de la matrice (HH*)$_i$. Lorsque le processus s'arrête, un nombre p de couples de valeurs propres et vecteurs propres est obtenu. Ce nombre p est inférieur ou égal au nombre de valeurs propres non nulles de la matrice d'autocorrélation optimale.

Un avantage est de réduire d'autant plus la complexité du procédé qu'on calcule moins de valeurs propres. Or il s'avère que toutes les valeurs propres ne sont pas forcément significatives et donc nécessaires à l'émetteur, ce qui rend cette technique d'autant plus intéressante.

Plusieurs critères d'arrêt sont envisageables : A titre d'exemple, on cite une estimation d'un gain en capacité apporté par la valeur propre courante ou une contrainte de dimensionnement/format du signal de retour vers l'équipement émetteur.

Selon un autre aspect de l'invention, l'étape d'extraction de valeurs propres du produit de la matrice de canal par son transconjugué (HH*) extrait les valeurs propres selon un ordre de valeurs décroissantes et comprend les sous-étapes suivantes :

- Calcul itératif d'au moins une puissance géométrique de la matrice produit de la matrice de canal par son transconjugué $(HH*)^{2n}$, le nombre d'itérations étant fonction d'un critère de convergence prédéterminé ;

- Extraction d'un couple $(\lambda_1, v_1)$ comprenant la valeur propre $(\lambda_1)$ de plus grande amplitude et son vecteur propre associé par produit de la au moins une puissance géométrique calculée $(HH*)^{2n}$ avec un vecteur initial de dimension (r).

- Obtention d'une nouvelle matrice (HH*)$_1$ par soustraction d'un produit du couple extrait au produit de la matrice de canal par son transconjugué (HH*) ;

et lesdites sous-étapes sont répétées, tant qu'un critère d'arrêt prédéterminé n'est pas satisfait

Un avantage de ce mode de réalisation est que la convergence géométrique est plus rapide et nécessite donc moins d'itérations pour obtenir un couple valeur propre, vecteur propre recherché.

Selon encore un autre aspect de l'invention, le procédé comprend en outre une sous-étape d'estimation d'un gain de capacité associé à une $n^{ème}$ valeur propre extrait à partir d'un rapport entre une première capacité de débit associée aux n-1 valeurs propres précédentes et une deuxième capacité associée aux n valeurs propres courantes, une sous-étape de décision de prise en compte de la $n^{ème}$ valeur propre par comparaison du gain de capacité $(G_C)$ calculé associé à la $n^{ème}$ valeur propre par rapport à un seuil prédéterminé $(S_C)$.

Un avantage est qu'on ne prend en compte pour le calcul des caractéristiques propres de la matrice d'autocorrélation et qu'on ne transmet ensuite que les celles qui apportent une amélioration significative et suffisante de la capacité du système de transmission MIMO. Les ressources de calcul au niveau de l'équipement récepteur et de l'équipement émetteur sont économisées ainsi que les ressources de bande passante.

Selon une caractéristique avantageuse, le critère d'arrêt prend en compte la décision prise.

Un avantage est qu'on stoppe le processus d'extraction des valeurs propres, dès qu'on a décidé que la valeur propre courante n'apportait pas un gain suffisamment significatif pour qu'on la transmette à l'équipement émetteur.

Selon une autre caractéristique avantageuse de l'invention, le critère d'arrêt prend en outre en compte un format du signal de retour ;

Un avantage est que le critère d'arrêt peut prendre en compte d'autres contraintes et par exemple limiter l'extraction à un certain nombre de couples de valeurs propres vecteurs propres.

Selon un autre aspect de l'invention, suite à une nouvelle estimation du canal de transmission, les étapes du procédé sont répétées et en ce que la sous-étape d'extraction d'un i$^{ème}$ couple prend comme vecteur initial le i$^{ème}$ vecteur propre extrait lors de la mise en oeuvre précédente du procédé.

La nouvelle estimation de canal peut être faite à un instant suivant ou pour une autre portion de bande de fréquences. Un avantage de ce mode de réalisation est que, lorsque le canal a peu changé, la convergence de la méthode d'extraction des couples de caractéristiques propres est beaucoup plus rapide.

Le procédé qui vient d'être décrit dans ses différents modes de réalisation est avantageusement mis en oeuvre par un dispositif de traitement d'informations représentatives d'un canal de transmission entre un équipement radio récepteur, comprenant une pluralité d'antennes de réception, et un équipement radio émetteur, comprenant une pluralité d'antennes d'émission, le nombre d'antennes d'émission étant supérieur au nombre d'antennes de réception, lesdites informations comprenant une matrice représentative du canal de transmission préalablement estimée à partir d'au moins un signal de données reçu, ledit dispositif comprenant une unité d'obtention de caractéristiques propres du produit du transconjugué de la matrice de canal avec la matrice de canal, comprenant des valeurs propres non nulles et des vecteurs propres associés auxdites valeurs propres.

Selon l'invention, un tel dispositif est particulier en ce qu'il comprend en outre les unités suivantes :

- Obtention d'une mesure d'un rapport signal à bruit dans le canal de transmission ;
- Calcul d'au moins une valeur propre d'une matrice d'autocorrélation des symboles à l'émission, selon un critère de maximisation d'une capacité du canal de transmission, à partir des valeurs propres obtenues, rangées selon un ordre décroissant et de la mesure de rapport signal à bruit, selon les équations suivantes :

$$0 \leq p \leq argmax_{m \leq r} m^{-1}\left(1 + (rt\rho)^{-1}\sum_{k \leq m} \lambda_k^{-1}\right) > \left(rt\rho\lambda_m\right)^{-1}$$

$$\mu_i = \frac{1}{p}\left(1 + \sum_{j=1}^{p}\frac{1}{rt\rho\lambda_j}\right) - \frac{1}{rt\rho\lambda_i}$$

pour $1 \leq i \leq p$

$$\mu_i = 0,$$

*pour p < i ≤ t* la valeur propre non nulle de la matrice d'autocorrélation étant associée au même vecteur propre que la valeur propre du produit du transconjugué de la matrice de canal avec la matrice de canal; et

- Transmission d'informations représentatives de ladite au moins une valeur propre non nulle calculée et de son vecteur propre associé.

Bien sûr, le dispositif de traitement d'informations représentatives d'un canal de transmission selon l'invention peut être agencé pour mettre en oeuvre, de façon indépendante ou en combinaison, l'ensemble des modes de réalisation qui viennent d'être décrits pour le procédé de traitement.

Corrélativement, l'invention concerne aussi un équipement de communication radio, dit récepteur, comprenant une pluralité d'antennes de réception et au moins une antenne d'émission, comprenant le dispositif de traitement d'informations représentatives d'un canal de transmission qui vient d'être décrit.

L'invention concerne encore un programme d'ordinateur comportant des instructions pour la mise en oeuvre des étapes d'un procédé de traitement d'informations représentatives d'un canal de transmission tel que décrit précédemment, lorsque ce programme est exécuté par un processeur.

Ce programme peut utiliser n'importe quel langage de programmation. Il peut être téléchargé depuis un réseau de communication et/ou enregistré sur un support lisible par ordinateur.

L'invention se rapporte enfin à un support d'enregistrement, lisible par un processeur, intégrés ou non au dispositif de traitement d'informations représentatives d'un canal de transmission et au dispositif de traitement d'un signal de retour selon l'invention, éventuellement amovible, mémorisant respectivement un programme d'ordinateur mettant en oeuvre un procédé de traitement d'informations représentatives d'un canal de transmission, tel que décrit précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** (déjà décrite) illustre de façon schématique un exemple de chaîne de communication MIMO selon l'art antérieur ;

- la figure **2A** (déjà décrite) illustre un schéma de modulation de type QPSK ;

- la figure **2B** (déjà décrite) illustre un schéma de modulation de type 16-QAM ;

- la figure **3** (déjà décrite) illustre le principe de répartition des symboles à émettre sur la pluralité d'antennes d'émission par un précodeur MIMO, selon l'art antérieur ;

- la figure **4** présente les étapes d'un procédé de traitement d'un signal de données utiles reçu par un équipement de communication radio, dit équipement récepteur, selon un mode de réalisation de l'invention ;

- la figure **5** présente de façon schématique un exemple de signal de retour émis par le procédé de traitement d'un signal de données utiles selon un mode de réalisation de l'invention ;

- la figure **6** décrit plus en détail l'étape d'extraction des caractéristiques propres d'un produit de la matrice de canal par son transconjugué selon un mode de réalisation de l'invention ;

- la figure **7A** illustre une représentation graphique d'un gain de capacité apporté par l'extraction d'une valeur propre supplémentaire et son vecteur propre associé selon un mode de réalisation de l'invention, quand l'équipement récepteur comprend deux antennes de réception ;

- la figure **7B** présente un exemple d'application de l'invention à la planification de réseau ;
  -- la figure **8A** présente les étapes d'un procédé de traitement d'un signal de retour reçu par un équipement de communication radio, dit équipement émetteur, selon un mode de réalisation de l'invention ;

- la figure **8B** détaille l'étape de configuration d'un précodage MIMO du procédé de traitement d'un signal de retour, selon un mode de réalisation de l'invention ;

- la figure **9** décrit plus en détails l'étape de configuration d'une répartition des symboles à émettre sur la pluralité d'antennes d'émission, à partir des informations du signal de retour, selon un mode de réalisation de l'invention ;

- la figure **10** illustre de façon schématique un exemple de structure matérielle d'un équipement de communication radio, dit équipement récepteur, comprenant un dispositif de traitement d'un signal de données utiles selon un mode de réalisation de l'invention ; et

- la figure **11** illustre de façon schématique un exemple de structure matérielle d'un équipement de communication radio, dit équipement émetteur, comprenant un dispositif de traitement d'un signal de retour selon un mode de réalisation de l'invention.

## 7. Description d'un mode de réalisation particulier de l'invention

Le principe général de l'invention repose d'abord sur un calcul astucieux des caractéristiques propres du produit du transconjugué de la matrice de canal par elle-même, ensuite sur l'utilisation des caractéristiques propres calculées pour déterminer celles d'une matrice d'autocorrélation des symboles à l'émission qui maximise la capacité du canal de transmission et enfin sur l'insertion dans un signal de retour des couples de valeurs propres et vecteurs propres de cette matrice d'autocorrélation qui contribuent significativement à la maximisation de la capacité du canal de transmission.

Dans la suite de la description, on se place en particulier dans un contexte MIMO dans lequel l'émetteur compte plus d'antennes que le récepteur. On notera t le nombre d'antennes à l'émission et r le nombre d'antennes à la réception, avec t»r.

On considère en particulier un équipement de communication radio, dit équipement récepteur ER, comprenant R antennes de réception et au moins une antenne d'émission. A titre d'exemple, l'équipement récepteur ER est un terminal mobile, de type téléphone intelligent (pour « smartphone », en anglais) ou tout autre terminal apte à établir une communication avec un réseau de communication radio, par exemple cellulaire selon une norme 3GPP, Wifi selon la norme IEEE 802.11, ou encore courte portée selon une norme de type BlueTooth, Zigbee ou autre.

On suppose que cet équipement a préalablement reçu d'un équipement de communication radio, dit équipement émetteur ET, comprenant t antennes d'émission et au moins une antenne de réception, au moins un signal de données DS sur un canal de transmission CH. L'équipement émetteur ET est par exemple une station de base d'un réseau de communication radio cellulaire de deuxième génération (2G), un équipement enodeB pour un réseau de troisième ou quatrième génération (3G, 4G), ou tout autre équipement émetteur conforme à une future version de la norme 3GPP, ou une borne d'accès (pour « hotspot », en anglais) pour un réseau de communication radio de type Wifi conforme à la norme IEEE 802.11.

A partir de ce signal, l'équipement récepteur ER a estimé le canal de transmission CH et déterminé une matrice de canal H, de dimension rxt, comprenant des coefficients $h_{ij}$, tels que i désigne la i$^{ème}$ antenne de réception de l'équipement ER et j la j$^{ème}$ antenne d'émission de l'équipement ET, i et j étant des entiers compris respectivement entre 0 et r-1 et 0 et t-1.

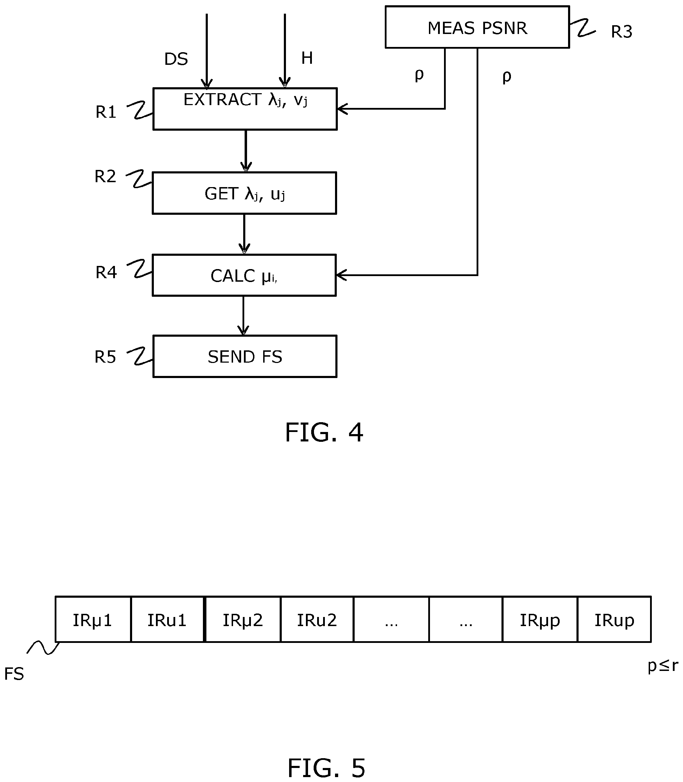

En relation avec la Figure **4**, on décrit les étapes d'un procédé de traitement d'informations représentatives d'un canal de transmission selon un mode de réalisation de l'invention.

Un objectif de l'invention est de construire un précodeur, c'est-à-dire un choix de coefficients complexes multipliant les symboles émis sur les différentes antennes d'émission, qui maximise la capacité C de ce canal.

Cette capacité C du canal s'exprime de la façon suivante, connue de l'homme de métier :

$$C = \int_B \log_2(\det(I_t + rt\rho Q\, H^*H)\ df\ (1)$$

où $I_t$ est une matrice identité de dimension txr, ρ désigne le rapport signal à bruit mesuré pour le canal de transmission, par exemple à partir du signal de données utiles DS reçu, Q une matrice d'autocorrélation de symboles à l'émission de trace (somme des éléments diagonaux) égale à 1 et H*H le produit du transconjugué de la matrice de canal par elle-même de trace égale à 1 et B est la bande de fréquences sur laquelle le signal est transmis. Les matrices H et Q, ainsi que le rapport signal à bruit sont fonction de la fréquence f.

La capacité C d'un canal de transmission correspond au débit théorique maximal que l'on peut atteindre dans ce canal. Pour maximiser cette capacité et construire un précodeur optimal, on peut agir sur les coefficients de la matrice d'autocorrélation Q des symboles à l'émission, les autres termes de l'équation étant déterminés.

L'extraction des caractéristiques propres de la matrice *H*H* est nécessaire à la construction du précodeur optimal. Pour extraire ces caractéristiques propres, trois possibilités s'offrent à nous :

- Décomposition en valeurs singulières de H de taille r x t ;
- Décomposition en valeurs propres de *H*H* de taille t x t ;
- Décomposition en valeurs propres de *HH** de taille r x r.

Dans le contexte r<<t, la dernière possibilité est bien plus avantageuse mais elle n'a pas été exploitée jusqu'à aujourd'hui, car il n'est pas évident d'établir un lien entre les caractéristiques propres de *H*H* et celles de *HH*.*

Les inventeurs ont néanmoins réussi à prouver que :

- les valeurs propres non-nulles du produit matriciel *H*H* et celles du produit matriciel *HH** sont identiques ; et que
- Un vecteur propre $v_i$ de la matrice H*H associé à la valeur propre $\lambda_i$ peut toujours être obtenu par le produit d'un vecteur propre de HH* associé à la valeur propre $\lambda_i$ par H* le transconjugué de H.

Pour prouver ces propriétés, on s'appuie sur le fait que H*H et HH* sont des matrices hermitiennes positives et qu'elles sont donc diagonalisables avec des valeurs propres supérieures ou égales à 0. Pour une matrice A de taille r x t et une matrice B de taille t x r, on connait notamment de l'ouvrage Matrix Analysis de Roger A. Horn et Charles R. Johnson publié en 1990 par Cambridge University Press, page 53, l'égalité suivante sur les polynômes caractéristiques :

$$(-\lambda)^t \det(AB - \lambda I_r) = (-\lambda)^r \det(BA - \lambda I_t) \quad (2)$$

En remplaçant A par H et B par H*, on a:

$$(-\lambda)^t \det(HH^* - \lambda I_r) = (-\lambda)^r \det(H^*H - \lambda I_t) \qquad (3)$$

Par conséquent, les valeurs propres non-nulles de $H^*H$ sont égales aux valeurs propres non-nulles de $HH^*$ avec leur ordre de multiplicité.

Le sous espace propre $E_{\lambda_i}$ associé à la valeur propre $\lambda_i$ de $H^*H$ et le sous espace propre $F_{\lambda_i}$ associé à la valeur propre $\lambda_i$ de $HH^*$ ont donc la même dimension que nous noterons $\alpha_i$. $\alpha_i$ = étant un entier non nul.

On considère maintenant $H(E_{\lambda_i})$ l'image de $E_{\lambda_i}$ par H. Nous allons maintenant prouver que $H(E_{\lambda i}) = F_{\lambda_i}$ et que $H^*(F_{\lambda_i}) = E_{\lambda_i}$. Les deux propriétés se montrent de la même façon. Justifions-le pour la première :
Soit $(x_1, ..., x_{\alpha_i})$ une base de $E_{\lambda_i}$,

$$H^*Hx_k = \lambda_i x_k \ \forall k \in [1; \alpha_i] => HH^*(Hx_k) = \lambda_i(Hx_k) \ \forall k \in [1; \alpha_i]$$

Donc $H(E_{\lambda_i}) \subset F_{\lambda_i}$.

Supposons qu'il existe $(\mu_1, ... \mu_{\alpha_i}) \in \mathbb{C}^{\alpha_i}$ vérifiant $\sum_{k=1}^{\alpha_i} \mu_k(Hx_k) = 0$ ;

En appliquant $H^*$ à cette relation, on obtient :

$$\sum_{k=1}^{\alpha_i} \mu_k H^*Hx_k = 0 => \lambda_i \sum_{k=1}^{\alpha_i} \mu_k x_k = 0$$

Or $\lambda_i \neq 0$ donc

$$\sum_{k=1}^{\alpha_i} \mu_k x_k = 0$$

$(x_1, ..., x_{\alpha_i})$ est une base de $E_{\lambda_i}$, c'est donc une famille libre. On en déduit que :

$$(\mu_1, ... \mu_{\alpha_i}) = (0, ... 0).$$

La famille $(H_{x1}, ..., Hx_{\alpha_i})$ est donc une famille libre dans $H(E_{\lambda_i})$ de dimension $\alpha_i$. On en déduit que :

$$\dim(H(E_{\lambda_i})) = \dim(F_{\lambda_i})$$

$H(E_{\lambda_i}) \subset F_{\lambda_i}$ et $\dim(H(E_{\lambda_i})) = \dim(F_{\lambda_i})$, on a donc $H(E_{\lambda_i}) = F_{\lambda_i}$. $\qquad (4)$

Au cours d'une étape $R_1$, on extrait donc des valeurs propres non nulles $\lambda_k$ du produit matriciel $HH^*$ et leurs vecteurs propres associés $v_k$, avec k entier compris entre 1 et p, avec p≤r. On obtient donc p couples $(\lambda_k, v_k)$.

Au cours d'une étape $R_2$, on utilise les propriétés qui relient les caractéristiques propres du produit matriciel $H^*H$ à celles du produit matriciel $HH^*$ pour en déduire les vecteurs propres $u_k$ de $H^*H$, associés aux valeurs propres non nulles $\lambda_k$. On obtient p couples $(\lambda_k, u_k)$.

Au cours d'une étape $R_3$, on utilise une mesure du rapport signal à bruit p dans le canal de transmission CH obtenue à partir du signal reçu par l'équipement ER et notamment des pilotes émis de façon connue de l'homme de métier par l'équipement émetteur ET.

Au cours d'une étape $R_4$, on calcule les caractéristiques propres de la matrice d'autocorrélation $Q_{opt}$ qui maximise la capacité C du canal, selon l'équation (1).

On appelle U la matrice dont les colonnes sont les sous-espaces propres de H*H. Il s'agit de la matrice de passage de la base canonique (base de vecteurs naturelle) à la base orthonormée formée par les vecteurs propres de H*H. On appelle A la matrice composée des valeurs propres de H*H, *H*H = UΛU**. Dans la base formée par les sous-espaces propres de H*H, la formule (1) devient :

$$C = \int_B \log_2(\det(I_t + rt\rho U^*QU\,\Lambda))df \quad (5)$$

où B désigne la bande de fréquences sur laquelle les données sont émises.

La maximisation de C revient à la maximisation, pour chaque fréquence, du terme intégré.

Soit A une matrice de taille t x t définie positive, on note $A_{ii}$ les éléments diagonaux de A. L'inégalité d'Hadamard est la suivante :

$$\det(A) \le \prod_{i=1}^t A_{ii} \qquad (6)$$

Elle devient une égalité lorsque la matrice A est diagonale. Cette formule est par exemple décrite dans l'ouvrage « Inequalities : a journey into Linear Algebra » de D.J.H. Garling de 2007, page 233.

En appliquant cette inégalité à la formule (5), on constate que la capacité pour chaque fréquence f ne peut être maximale que lorsque $I_t + \rho U^*QU\,\Lambda$ est diagonale, c'est-à-dire lorsque $U^*QU$ est diagonale est donc que Q est diagonalisable dans la même base que H*H.

Les sous espaces propres de $Q_{opt}$ coïncident donc avec ceux de H*H.

Dans la suite, on désigne par $\mu_i\, i \in [\![1;t]\!]$ la valeur propre associée au sous-espace propre $E_{\lambda_i}$. Résoudre le problème d'optimisation de la capacité C du canal de transmission revient alors à résoudre le problème de maximisation de valeurs propres c'est-à-dire :

$$\max_{\mu_i \ge 0, \sum \mu_i = 1} \sum_{i=1}^t log_2(1 + rt\rho\mu_i\lambda_i) \qquad (7)$$

Ce problème se résout avantageusement à l'aide des multiplieurs de Lagrange.

On connait de l'article intitulé « Capacity of Multi-antenna Gaussian Channels », par E. Telatar, publié en 1999 dans la revue « European Transactions on Télécommunications », Vol. 10, Issue 6, pages 585-595, en Novembre 1999, une technique dite procédé de water-filling, que l'on peut exposer comme suit :

$$\mu_i = \max(\mu - \frac{1}{rt\rho\lambda_i}, 0) \qquad (8)$$

où $\mu$ est une constante permettant de vérifier la contrainte, r le nombre d'antennes à la réception et t le nombre d'antennes à l'émission :

$$\sum_{i=1}^r \mu_i = 1$$

Cette formulation (7) présente comme premier inconvénient le fait de ne pas donner de formule explicite pour le calcul des $\mu_i$ et comme deuxième inconvénient, celui de ne pas identifier directement le nombre de valeurs propres non-nulles de $Q_{opt}$.

Les inventeurs ont trouvé une formulation de la solution du problème qui comble ces deux lacunes et qui va maintenant être détaillée.

Les valeurs propres $\lambda_i$ de H*H sont classées par ordre décroissant ($\lambda_1 \ge \lambda_2 \ge \cdots \ge \lambda_r$).

On définit $p_{max}$ comme le plus grand entier vérifiant l'inégalité suivante :

$$\frac{1}{p_{max}}\left(1 + \sum_{j=1}^{pmax} \frac{1}{rt\rho\lambda_j}\right) > \frac{1}{rt\rho\lambda_{pmax}} \qquad (9)$$

$p_{max}$ correspond au nombre de valeurs propres non nulles de la matrice d'autocorrélation optimale $Q_{opt}$.

Pour calculer les $p_{max}$ valeurs propres de la matrice d'autocorrélation optimale $Q_{opt}$, on utilise la formule suivante :

$$\mu_i = \frac{1}{p_{max}}\left(1 + \sum_{j=1}^{pmax}\frac{1}{rt\rho\lambda_j}\right) - \frac{1}{rt\rho\lambda_i} \qquad (10)$$

Les $t\text{-}p_{max}$ valeurs propres restantes sont mises à 0.

On obtient de cette manière les $p_{max}$ couples de valeurs propres et vecteurs propres de la matrice d'autocorrélation $Q_{opt}$.

Selon une variante, on peut choisir a priori de calculer un nombre p de couples de valeurs propres et vecteurs propres de la matrice $Q_{opt}$, tel que $1 \leq p \leq p_{max}$, par exemple en fonction d'un critère prédéterminé, tel qu'un format du signal de retour FS, des contraintes de ressources de calcul de l'équipement émetteur ou de l'équipement récepteur ou encore un gain apporté par les couples de valeurs propres vecteurs propres.

Connaissant l'équation (10), dans laquelle on remplace $p_{max}$ par p, on comprend que ce choix de p a une incidence sur le calcul des p valeurs propres $\mu_i$. Un avantage est d'optimiser la matrice $Q_{opt}$ pour la valeur de p choisie.

Dans la suite, on détaillera un mode de réalisation selon lequel le nombre p est déterminé lors de l'extraction des valeurs propres $\lambda_i$ de H*H.

Au cours d'une étape $R_5$, on insère des informations relatives à au moins un de ces p couples dans un signal de retour FS qu'on transmet à l'équipement émetteur ET via le canal de transmission remontant CH'.

En relation avec la Figure **5**, on présente à titre illustratif un exemple de format de signal de retour portant des informations représentatives d'au moins un couple de caractéristiques propres ($\mu_i$, $u_i$) de la matrice $Q_{opt}$. Ces informations $IR\mu_i$, $IRu_i$ sont par exemple des index d'un alphabet (pour « codebook », en anglais), dont la connaissance est partagée par les équipements émetteur et récepteur.

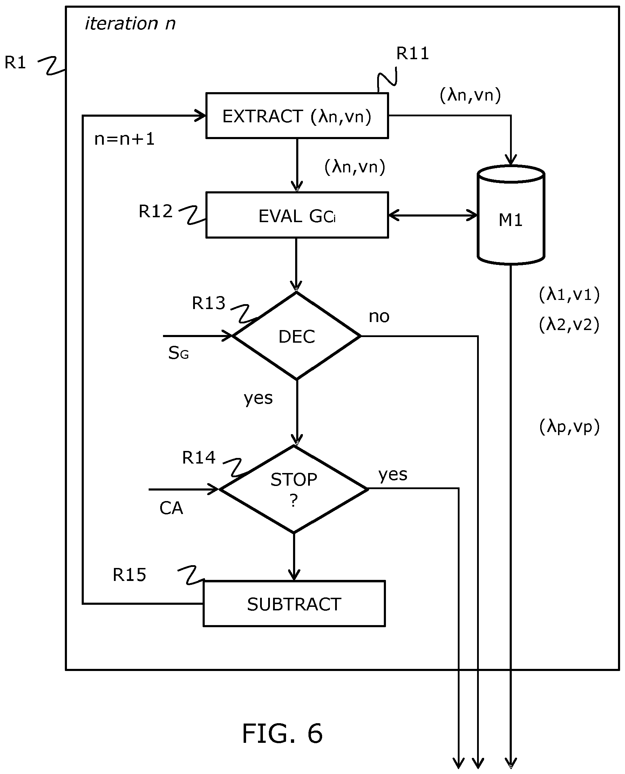

En relation avec la Figure **6**, on décrit plus en détails un premier mode de réalisation de l'étape $R_1$ d'extraction des caractéristiques propres du produit matriciel HH*.

Selon ce premier mode de réalisation de l'invention, l'extraction des valeurs propres comprend les sous-étapes suivantes :

Au cours d'une sous-étape $R_{11}$, on met en oeuvre un algorithme dit de la puissance (pour « power method », en anglais). Un tel algorithme est itératif et permet d'extraire la valeur propre $\lambda_1$ de plus grande amplitude de la façon suivante :

On initialise l'algorithme avec un vecteur v qui peut être aléatoire. A chaque itération de l'algorithme, on multiplie le vecteur obtenu après l'itération précédente par *HH*\*. Après un grand nombre d'itérations, de l'ordre d'une dizaine, le vecteur obtenu est le vecteur propre $v_1$ associé à la plus grande valeur propre de *HH*\*. En le normalisant on obtient un vecteur propre unitaire. La valeur propre $\lambda_1$ recherchée est la norme du vecteur normalisé multipliée par HH*.

Au cours d'une étape $R_{15}$, on soustrait au produit matriciel *HH*\* l'information relative à la valeur propre $\lambda_1$ de plus grand module, selon la formule suivante :

$$(HH^*)_1 = (HH^*)_0 - \lambda_1 v_1 v_1^* \qquad (11)$$

où $(HH^*)_0$ est égal au produit matriciel HH* et $(HH^*)_1$ est un produit matriciel obtenu à l'issue d'une première itération de l'algorithme et dont la valeur propre de plus grande amplitude correspond à la deuxième valeur propre de plus grande amplitude de HH*. Il s'agit d'une méthode de déflation.

On comprend que de cette manière, il est possible d'itérer ensuite l'algorithme de la puissance pour obtenir la seconde valeur propre $\lambda_2$ et son vecteur propre associé $v_2$. On répète donc les étapes $R_{11}$ et $R_{12}$ qui viennent d'être décrites, p fois, jusqu'à obtenir les p couples de caractéristiques propres de HH*, l'itération n, avec n entier $\leq p$, permettant d'obtenir la valeur propre $\lambda_n$, le vecteur propre $v_n$ et le produit matriciel $(HH^*)_n$.

Selon un deuxième mode de réalisation de l'invention, on peut accélérer le traitement de la sous-étape $R_{11}$ qui vient d'être décrit en calculant une puissance de la matrice $(HH^*)_n$ et en l'appliquant au vecteur aléatoire initial v. Si on ne prend pas en compte les normalisations, le résultat obtenu après q itérations de l'algorithme présenté précédemment est :

$$- \quad (HH^*)^q\, v \qquad (12)$$

où v est le vecteur initial.

On peut donc calculer une puissance de la matrice et ensuite en faire le produit par v pour obtenir le vecteur propre désiré et la valeur propre voulue. Pour calculer une puissance de *HH*\*, on met successivement cette matrice au carré, le résultat au carré et, après q itérations, généralement égal à 4 ou 5, on obtient la matrice suivante :

$$- \quad (HH^*)^{2^q} \quad (13)$$

En appliquant cette matrice au vecteur v, on obtient alors le couple de caractéristiques propres correspondant à la valeur propre de plus grande amplitude.

Un avantage de cette méthode géométrique est que le nombre d'itérations q nécessaire pour converger vers la direction du vecteur propre associé à la valeur propre de plus grande amplitude, est inférieur au nombre d'itérations n de la méthode précédente.

Avantageusement, les puissances intermédiaires de $HH^*$ conformes à la formule (13), telles que $(HH^*)^2$, $(HH^*)^{2^2}$,... $(HH^*)^{2^{q-1}}$, peuvent être stockées en mémoire pour les valeurs successives de l'itération q. Il est alors possible de construire n'importe quelle puissance de $HH^*$ en utilisant un produit des puissances calculées.

Ensuite, on met en oeuvre la sous-étape $R_{15}$ de déflation telle qu'elle a été décrite pour le mode de réalisation précédent.

L'étape d'extraction qui vient d'être présentée exploite une estimation du canal de transmission H, réalisée suite à la réception d'un signal de données sur ce canal à un instant et sur une portion de bande de fréquences donnés. Les propriétés du canal étant susceptibles d'évoluer au cours du temps, par exemple suite à un déplacement de l'équipement récepteur ER, l'estimation est répétée régulièrement. Suite à une nouvelle estimation, le procédé de traitement qui vient d'être décrit est de nouveau mis en oeuvre. Avantageusement, selon un mode de réalisation de l'invention, la méthode de puissance destinée à extraire successivement les couples de caractéristiques propres choisit, pour l'extraction du i[ème] couple, un vecteur initial égal au i[ème] vecteur propre $v_i$ extrait lors de la mise en oeuvre précédente du procédé. Ainsi, si le canal a peu changé, la convergence de la méthode d'extraction des couples de caractéristiques propres est beaucoup plus rapide.

Encore en relation avec la Figure **6**, on décrit maintenant un troisième mode de réalisation de l'étape d'extraction $R_1$.

Suite à l'extraction d'un couple de caractéristiques propres $(\lambda_n, v_n)$, avec n entier strictement supérieur à 1, une sous-étape $R_{12}$ d'évaluation d'un gain de capacité $Gc_n$ apporté par le couple extrait est mise en oeuvre.

Le gain de capacité $Gc_n$ s'exprime avantageusement de la façon suivante :

$$- \quad G_{C_n} = \frac{C_n}{C_{n-1}} \quad (14)$$

Où $C_n$ désigne la capacité du canal avec prise en compte des n principaux couples de valeurs propres et vecteurs propres associés.

Connaissant l'équation (1) qui détermine la capacité C du canal de transmission en fonction du rapport signal à bruit p, de la matrice d'autocorrélation Q et du produit matriciel $H^*H$, on calcule la valeur de capacité $C_n$ à l'aide d'une matrice d'autocorrélation incomplète $Q_n$ obtenue à partir des n couples de caractéristiques propres calculés. La valeur de capacité $C_{n-1}$ ayant été calculée à l'itération précédente, on en déduit la valeur du gain de capacité $G_{C_n}$ procuré par l'itération n.

Au cours d'une étape $R_{13}$, on compare la valeur de gain de capacité obtenu à un seuil prédéterminé $S_G$, par exemple égal à 1,2 ou 1,3.

Si le gain $G_{C_n}$ est supérieur ou égal au seuil $S_G$, on décide de prendre en compte le couple de caractéristiques propres $(\lambda_p, v_p)$ dans la suite du traitement, notamment pour le calcul des caractéristiques propres de la matrice d'autocorrélation optimale $Q_{opt.}$.

Sinon, on décide de ne pas le considérer. Dans ce cas, le traitement s'arrête, car les caractéristiques propres suivantes, de moins grande amplitude, auront nécessairement une contribution encore moins significative à la capacité du canal de transmission.

Avantageusement, au moins un autre critère d'arrêt CA peut être vérifié au cours d'une sous-étape R14. Il s'agit par exemple d'un critère lié à une contrainte de dimensionnement du signal de retour, qui n'autorise que la transmission d'une quantité d'information restreinte. Par exemple dans la norme LTE, pour une bande de 20 MHz, une centaine de bits est allouée pour la remontée d'information sur les caractéristiques du canal MIMO.

Si ce critère d'arrêt est satisfait, la boucle d'itérations prend fin et les n=p couples de caractéristiques propres retenus, par exemple stockés en mémoire M1 au fur et à mesure des itérations, sont codés puis insérés dans un signal de retour FS destiné à l'équipement émetteur ET.

Si ce critère d'arrêt n'est pas satisfait, la sous-étape R15 de soustraction est mise en oeuvre pour déterminer une nouvelle matrice $(HH^*)_p$ qui est traitée au cours d'une l'itération n+1.

On comprend qu'avec ce mode de réalisation de l'invention, on ne calcule pas toutes les valeurs propres non nulles de la matrice $HH^*$, mais seulement les p valeurs, avec p entier non nul inférieur ou égal à $p_{max}$, qui sont suffisamment significatives par rapport à un seuil de gain prédéterminé, dans la limite fixée par un critère d'arrêt prédéterminé. Un avantage est de faire un compromis entre efficacité et consommation de ressources de calcul et de bande passante.

Avantageusement, l'évaluation des gains de capacités au cours de l'étape R12 peut être mise en oeuvre à l'aide de tables pré-calculées et préalablement stockées en mémoire.

Selon un mode de réalisation de l'invention, on considère un rapport $c_n$, dit condition number, entre la valeur propre $\lambda_{\eta+1}$ calculée à l'itération n+1 et la valeur propre $\lambda_1$ calculée à la première itération :

$$- \quad c_n = \frac{\lambda_1}{\lambda_{n+1}} \qquad (15)$$

Le gain de capacité $G_{C_n}$ apporté par la n$^{\text{ième}}$ valeur propre dépend de $\lambda_1$, des n-1 conditions number et de la valeur du rapport signal à bruit mesuré p.

$$G_{C_n} = \frac{c_n}{c_{n-1}} = \frac{n}{n-1} \frac{\log_2\left(rt\rho + \frac{1}{\lambda_1} + \frac{1}{\lambda_1}\sum_{i=1}^{n} c_i\right) + \log_2\left(\lambda_1^n \prod_{i=1}^{n}\frac{1}{c_i}\right)}{\log_2\left(rt\rho + \frac{1}{\lambda_1} + \frac{1}{\lambda_1}\sum_{i=1}^{n-1} c_i\right) + \log_2\left(\lambda_1^{n-1} \prod_{i=1}^{n-1}\frac{1}{c_i}\right)} \qquad (16)$$

Avantageusement, les tables préétablies comprennent des entrées qui associent à des valeurs particulières du rapport signal à bruit p et du condition number $c_n$, la valeur de gain $G_{Cn}$ de capacité correspondante. De cette manière, la sous-étape $R_{12}$ devient très économe en ressources de calculs.

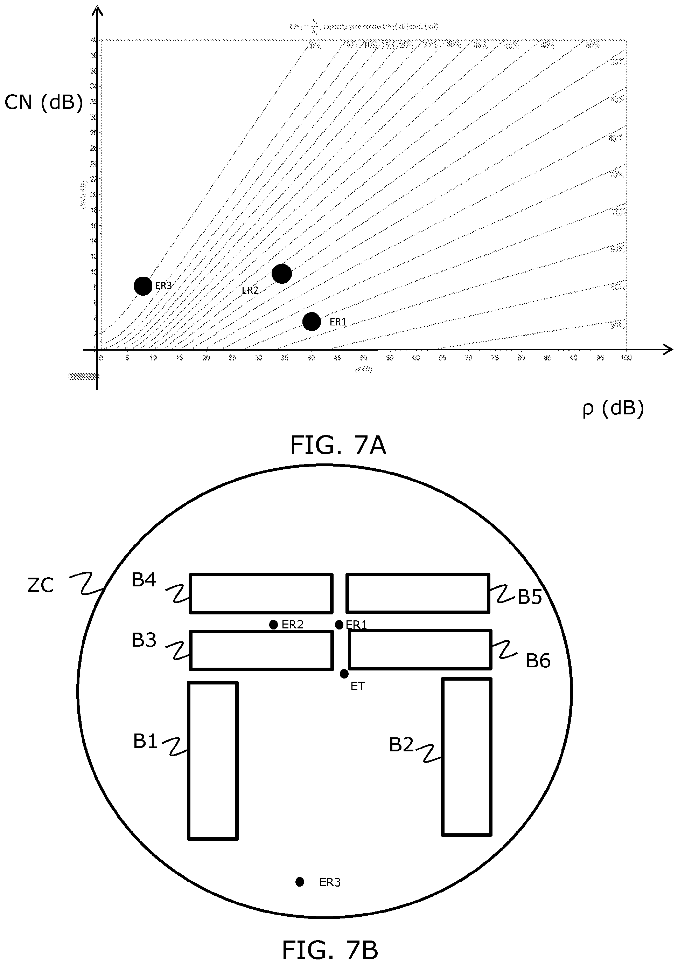

On considère maintenant le cas particulier selon lequel l'équipement récepteur ER ne comporte que deux antennes de réception. On a donc r=2. Dans ce cas, les valeurs stockées dans les tables peuvent avantageusement être représentées sous forme de courbes ou abaques, telles que celles de la Figure **7A**. Chaque courbe correspond à une valeur de gain de capacité prédéterminée et fait varier le condition number (représenté en ordonnée) en fonction du rapport signal à bruit (représenté en ordonnée).De telles courbes permettent d'évaluer en un coup d'oeil si un couple de valeur propre et vecteur propre apporte un gain de capacité suffisant pour être transmis à l'équipement émetteur. On notera toutefois qu'elles ne sont exploitables qu'à partir du deuxième couple de caractéristiques propres.

On notera aussi que la définition du rapport signal à bruit ou SNR (pour « Signal to Noise Ratio », en anglais) utilisée pour pouvoir faire ce tracé n'est pas la définition usuelle du rapport signal à bruit tel que le rapport $\rho$ utilisé jusqu'à maintenant dans la description. On a ici un rapport SNR caractéristique des systèmes MIMO, qui dépend du nombre d'antennes à l'émission et à la réception. Le lien entre ce rapport SNR MIMO et le rapport SNR utilisé habituellement est défini comme suit :

$$\rho_{MIMO} = r \times t \times \rho \qquad (17)$$

Avec l'introduction d'un tel SNR, les courbes de gain de l'abaque ne dépendent plus du nombre d'antennes du système.

Le fait de présenter un mode de visualisation graphique du gain de capacité apporté par un couple de caractéristiques propres extrait trouve une application particulière pour la planification de réseau. En effet, dans un scénario donné, il est possible de visualiser sur les abaques le gain de capacité obtenu grâce à l'ajout d'un second couple de valeur propre, vecteur propre en plus d'un premier. De cette connaissance du nombre de couples à transmettre à l'équipement émetteur, on peut déduire la taille de la voie de retour. Avec l'invention, il devient donc possible d'établir une cartographie détaillée donnant la taille minimale de la voie de retour suffisante pour atteindre la capacité optimale du canal de transmission.

En relation avec la figure **7B** on illustre un exemple de scénario selon lequel on a disposé un équipement émetteur ET, par exemple un équipement émetteur de type station de base ou EnodeB par exemple, comprenant deux antennes d'émission, dans une zone géographique comprenant des bâtiments $B_1$ à $B_6$. On considère trois équipements récepteurs $ER_1$ à $ER_3$, comprenant chacun deux antennes de réception. Il s'agit par exemple de terminaux mobiles qui se déplacent dans la zone de couverture ZC de l'équipement émetteur. Avec l'invention, il suffit de placer le point ($\rho$, $c_2$) sur le diagramme et de déterminer l'abaque la plus proche pour obtenir le gain de capacité apporté par la deuxième valeur propre pour un terminal mobile donné, à un instant donné et à une position donnée dans la zone de couverture ZC. Par exemple, on constate que l'équipement récepteur $ER_3$ n'a pas d'intérêt à utiliser la seconde valeur propre contrairement à l'équipement ER1 qui obtient un gain de capacité de 1,65 c'est-à-dire de 65%.

On comprend que, pour définir les points d'installation d'un équipement émetteur ET, un fournisseur d'accès mobile peut avantageusement visualiser à partir de telles courbes la capacité de canal que lui fournirait une antenne d'émission sur une zone géographique donnée. En utilisant en parallèle les abaques montrant le gain de capacité apporté par la seconde valeur propre, il peut très rapidement estimer le nombre de couples de valeur propre et vecteur propre nécessaire pour obtenir le régime de capacité souhaité et évaluer la perte de capacité induite par l'utilisation d'un seul couple.

A l'issue du procédé qui vient d'être décrit en relation avec les Figures **4** à **7**, un signal de retour FS portant des informations représentatives des p couples de caractéristiques de la matrice d'autocorrélation $Q_{opt}$ sont envoyées dans le canal de transmission CH à destination de l'équipement émetteur ET. Ce dernier doit être capable d'identifier ces informations reçues et de les utiliser.

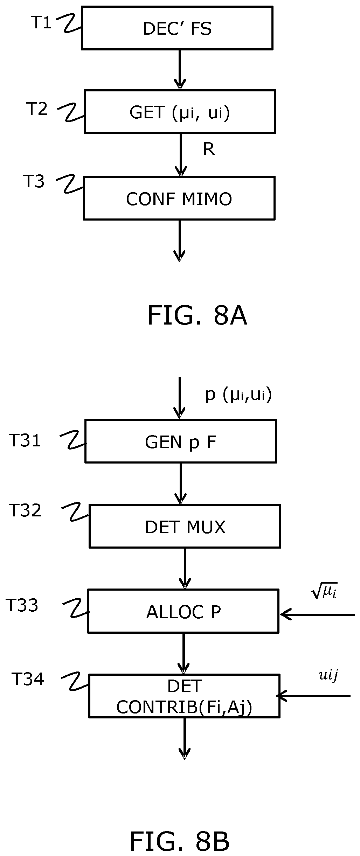

En relation avec la Figure **8**, on présente maintenant un procédé de traitement du signal de retour FS reçu par l'équipement émetteur.

Au cours d'une étape $T_1$, le signal de retour FS est reçu par l'équipement émetteur ET, décodé, démodulé pour en extraire les données utiles.

En $T_2$, les informations représentatives des p couples de caractéristiques propres sont identifiées dans les données utiles du signal reçu. Il peut s'agir des valeurs propres et des composantes de leurs vecteurs propres associés. En variante, l'information reçue peut comprendre les racines carrées des valeurs propres et les composantes de leurs vecteurs propres associés.

En $T_3$, les m couples sont exploités pour configurer le précodeur MIMO, c'est-à-dire la façon de répartir les symboles à émettre sur la pluralité t d'antennes d'émission de l'équipement émetteur. Selon un mode de réalisation de l'invention, l'étape T3 comprend les sous-étapes suivantes :

- Génération $T_{31}$ d'un nombre de flux $N_F$ égal au nombre p couples reçus ;
- Détermination $T_{32}$ d'un mode de répartition des symboles à transmettre sur les p flux. De façon connue, cette sous-étape détermine comment multiplexer les symboles à émettre sur les p flux générés ;
- Allocation $T_{33}$ au $i^{ème}$ flux d'une puissance proportionnelle à la racine carrée de la $i^{ème}$ valeur propre $\mu_i$. reçue ;
- Détermination des contributions $T_{34}$ des p flux sur la pluralité t d'antennes $a_1, a_2...a_j, a_t$ d'émission, la contribution du $i^{ème}$ flux à la $j^{ème}$ antenne $a_j$ étant proportionnelle au produit du symbole porté par celui-ci par la $t_j^{ème}$ composante $u_{i,j}$ du vecteur propre $u_i$. Le signal émis sur l'antenne sera donc la somme des contributions de chacun des m flux.

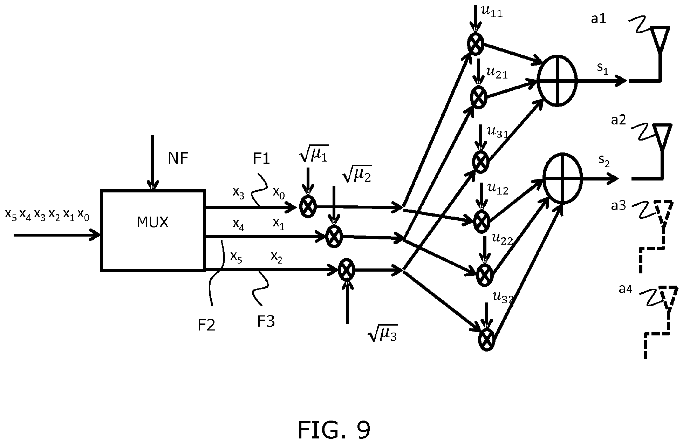

En relation avec la Figure **9**, on présente un exemple d'utilisation des m couples de caractéristiques propres transmis à un équipement émetteur ET comportant t = 4 antennes d'émission. Dans cet exemple, p est égal à 3. Un précodeur MIMO configuré selon l'invention utilise les 3 couples en créant $N_F$ = p =3 flux. Les symboles modulés sont répartis sur ces trois flux. La proportion de puissance allouée au $i^{ème}$ flux est égale à la racine carrée de la valeur propre $\mu_i$. Les flux sont ensuite répartis sur les 4 antennes $a_1$, $a_j$, $a_t$.chacun avec une contribution calculée comme précédemment décrit à partir des composantes des vecteurs propres associés aux 3 valeurs propres.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

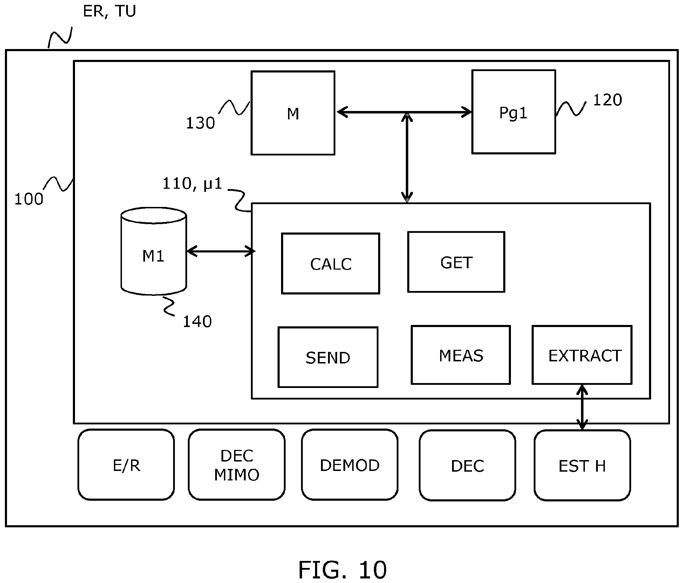

En relation avec la figure **10**, on présente maintenant un exemple de structure simplifiée d'un dispositif 100 de traitement d'un signal de données reçu selon l'invention. Le dispositif 100 met en oeuvre le procédé de traitement selon l'invention qui vient d'être décrit en relation avec les Figures **4** et **6**.

Par exemple, le dispositif 100 comprend une unité de traitement 110, équipée d'un processeur $\mu$1, et pilotée par un programme d'ordinateur Pg1 120, stocké dans une mémoire 130 et mettant en oeuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans cet exemple de réalisation de l'invention, le dispositif 100 comprend au moins une unité GET d'obtention de caractéristiques propres du produit du transconjugué de la matrice de canal avec la matrice de canal (H*H), une unité MEAS d'obtention d'un mesure d'un rapport signal à bruit dans le canal de transmission, une unité CALC de calcul des valeurs propres d'une matrice d'autocorrélation des symboles à l'émission selon un critère de maximisation d'une capacité du canal de transmission, à partir des valeurs propres obtenues et de la mesure de rapport signal à bruit, les valeurs propres non nulles ($\mu i$) de ladite matrice étant associées aux mêmes vecteurs propres que ceux du produit du transconjugué de la matrice de canal avec la matrice de canal (H*H) à partir des équations suivantes et une unité SEND de transmission des caractéristiques propres obtenues à l'équipement émetteur.

Avantageusement, le dispositif de traitement 100 comprend en outre une unité EXTRACT d'extraction de caractéristiques propres du produit de la matrice de canal avec le conjugué de la matrice de canal (HH*) à partir de la matrice de canal estimée. Les caractéristiques propres de la matrice H*H sont obtenus à partir des caractéristiques extraites pour le produit matriciel HH*, les valeurs propres non nulles du produit du transconjugué de la matrice de canal par la matrice de canal (H*H) étant identiques à celle du produit de la matrice de canal avec son conjugué (HH*), les vecteurs propres ($v_i$) du produit du transconjugué de la matrice de canal par la matrice de canal (H*H) étant obtenus à partir de ceux de la matrice (HH*) en effectuant le produit des vecteurs propres associés aux valeurs propres du produit de la matrice de canal par son transconjugué avec le transconjugué de la matrice de canal (H*).

Le dispositif 100 comprend en outre les sous-unités (non représentées) correspondant aux sous-étapes $R_{11}$ à $R_{15}$ du procédé de traitement d'un signal de données reçu selon un mode de réalisation de l'invention, qui consiste à extraire les couples de caractéristiques propres selon un ordre d'amplitude décroissant des valeurs propres, à évaluer le gain de capacité procuré par le couple courant et à décider de le transmettre ou non en comparant le gain évalué à un seuil prédéterminé. Le dispositif 100 comprend en outre une unité $M_1$ de stockage des couples de caractéristiques propres extraites. Avantageusement, elle mémorise en outre des tables précalculées des gains de capacité en fonction d'un rapport signal à bruit MIMO et d'un rapport condition number selon un mode de réalisation de l'invention. Elle peut mémoriser aussi les puissances de la matrice HH* calculées itérativement pour extraire la valeur propre de plus grande amplitude selon la méthode de la puissance.

Ces unités sont pilotées par le processeur $\mu_1$ de l'unité de traitement 110.

De façon avantageuse, un tel dispositif 100 peut être intégré à un équipement récepteur ER, tel que par exemple un terminal mobile d'utilisateur TU. Le dispositif 100 est alors agencé pour coopérer au moins avec le module suivant du terminal TU :

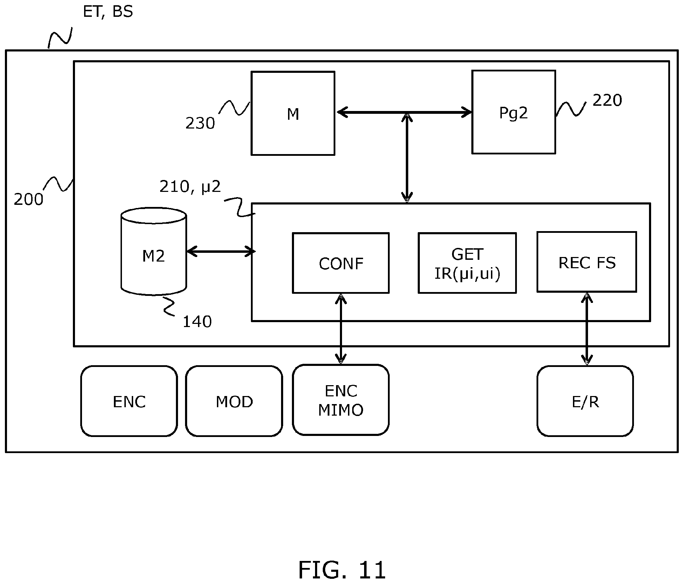

- un module E/R d'émission/réception de données, comprenant une pluralité r d'antennes de réception et au moins une antenne d'émission, par l'intermédiaire duquel les signaux de données utiles sont reçus de l'équipement émetteur ET et le signal de retour FS est transmis à l'équipement émetteur ET ;
- une unité DEC MIMO apte à décoder les symboles reçus de la pluralité d'antennes de réception ;
- une unité DEMOD de démodulation des symboles décodés apte à fournir les bits de données codés,
- une unité DEC de décodage de canal apte à fournir les bits de données utiles à partir des bits codés ; et
- une unité EST H d'estimation du canal de transmission à partir du signal de données DS reçu.
- En relation avec la figure **11**, on présente maintenant un exemple de structure simplifiée d'un dispositif 100 de traitement d'un signal de retour selon l'invention. Le dispositif 200 met en oeuvre le procédé de traitement selon l'invention qui vient d'être décrit en relation avec les Figures **8** et **9**.
- Par exemple, le dispositif 200 comprend une unité de traitement 210, équipée d'un processeur $\mu_2$, et pilotée par un programme d'ordinateur $Pg_2$ 220, stocké dans une mémoire 230 et mettant en oeuvre le procédé de selon l'invention.
- A l'initialisation, les instructions de code du programme d'ordinateur $Pg_2$ 220 sont par exemple chargées dans une mémoire RAM avant d'être exécutées par le processeur de l'unité de traitement 210. Le processeur de l'unité de traitement 210 met en oeuvre les étapes du procédé décrit précédemment, selon les instructions du programme d'ordinateur 220.
- Dans cet exemple de réalisation de l'invention, le dispositif 200 comprend une unité GET d'obtention d'informations représentatives dde m couples de caractéristiques propres reçus dans le signal de retour décodé, avec m supérieur ou égal à 1, et une unité CONF MIMO de configuration d'une répartition de symboles à émettre sur la pluralité d'antennes d'émission en fonction dudit au moins un couple obtenu.

Avantageusement l'unité de configuration d'une répartition de symboles à émettre ou précodage MIMO comprend les sous-unités (non représentées) suivantes :

- Génération d'un nombre de flux $N_F$ égal au nombre m couples reçus ;
- Détermination d'un mode de répartition des symboles à transmettre sur les m flux. De façon connue, cette sous-étape détermine comment multiplexer les symboles à émettre sur les m flux générés ;
- Allocation au $i^{ème}$ flux d'une puissance proportionnelle à la racine carrée de la $i^{ème}$ valeur propre $\mu_i$. reçue ;
- Détermination des contributions des m flux sur la pluralité t d'antennes $a_1,a_2...a_j,a_t$ d'émission, la contribution du $i^{ème}$ flux à la $j^{ème}$ antenne $a_j$ étant proportionnelle au produit du symbole porté par celui-ci par la $t_i^{ème}$ composante $u_{i,j}$ du vecteur propre $u_i$. Le signal émis sur l'antenne sera donc la somme des contributions de chacun des m flux.

Le dispositif comprend en outre une unité de stockage $M_2$, apte à stocker les couples de caractéristiques propres reçus. Ces unités sont pilotées par le processeur $\mu 1$ de l'unité de traitement 210.

De façon avantageuse, un tel dispositif 200 peut être intégré à un équipement émetteur ET, tel que par exemple une station de base SB. Le dispositif 200 est alors agencé pour coopérer au moins avec les modules suivants de l'équipement émetteur :

- un module E/R d'émission/réception de données, comprenant la pluralité t d'antennes d'émission et au moins une antenne de réception, par l'intermédiaire duquel les signaux de données utiles sont émis par l'équipement émetteur ET et le signal de retour FS est reçu de l'équipement récepteur ER ;

- un module ENC de codage de canal apte à encoder des données utiles,
- un module MOD de modulation apte à fournir des symboles à partir des données codées ;
- un module PRECOD MIMO de répartition des symboles à émettre sur la pluralité d'antennes d'émission en fonction de la configuration établie ;
- un module DEC' de décodage d'un signal de retour FS. De façon similaire à l'équipement de réception, un tel module comprend au moins une unité de décodage du signal en symboles, une unité de démodulation des symboles en données codées et une unité de décodage de canal, toutes connues de l'homme de métier.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de traitement d'informations représentatives d'un canal de transmission entre un équipement radio, dit récepteur (ER), comprenant une pluralité (r) d'antennes de réception et au moins une antenne d'émission, et un équipement radio, dit émetteur (ET), comprenant une pluralité (t) d'antennes d'émission et au moins une antenne de réception, le nombre d'antennes d'émission (t) étant supérieur au nombre d'antennes de réception (r), lesdites informations comprenant une matrice (H) représentative du canal de transmission (CH) préalablement estimée à partir d'au moins un signal de données reçu, ledit procédé comprenant une étape ($R_2$) d'obtention d'au moins un couple de caractéristiques propres du produit du transconjugué de la matrice de canal avec la matrice de canal (H*H), comprenant des valeurs propres non nulles ($\lambda_i$) et des vecteurs propres ($u_i$) associés auxdites valeurs propres, **caractérisé en ce qu'**il comprend en outre les étapes suivantes :

   - Obtention ($R_3$) d'une mesure d'un rapport signal à bruit dans le canal de transmission ;
   - Calcul ($R_4$) d'au moins une valeur propre ($\mu_i$) d'une matrice d'autocorrélation des symboles à l'émission ($Q_{opt}$), selon un critère de maximisation d'une capacité (C) du canal de transmission, à partir des valeurs propres ($\lambda_i$) obtenues, rangées selon un ordre décroissant et de la mesure ($\rho$) de rapport signal à bruit, selon les équations suivantes :

$$0 \leq p \leq argmax_{m \leq r} m^{-1}\left(1 + (rt\rho)^{-1}\sum_{k \leq m}\lambda_k^{-1}\right) > \left(rt\rho\lambda_m\right)^{-1}$$

$$\mu_i = \frac{1}{p}\left(1 + \sum_{j=1}^{p}\frac{1}{rt\rho\lambda_j}\right) - \frac{1}{rt\rho\lambda_i}$$

   pour $1 \leq i \leq p$

$$\mu_i = 0,$$

   pour $p < i \leq t$ p étant le nombre de valeurs propres calculées,
   la valeur propre ($\mu_i$) non nulle de la matrice d'autocorrélation ($Q_{opt}$) étant associée au même vecteur propre ($u_i$) que la valeur propre ($\lambda_i$) du produit du transconjugué de la matrice de canal avec la matrice de canal (H*H) ;
   - Transmission ($R_5$) à l'équipement émetteur d'informations représentatives de ladite au moins une valeur propre non nulle ($\mu_i$) calculée associé au vecteur propre ($u_i$).

2. Procédé de traitement d'informations représentatives d'un canal de transmission selon la revendication 1, **caractérisé en ce qu'**il comprend en outre une étape ($R_1$) d'extraction d'au moins un couple de caractéristiques propres du produit de la matrice de canal avec le transconjugué de la matrice de canal à partir de la matrice de canal estimée, ledit au moins un couple comprenant au moins une valeur propre non nulle ($\lambda_i$) et un vecteur propre associé ($v_i$) et, **en ce que**, les valeurs propres non nulles du produit du transconjugué de la matrice de canal par la matrice de canal (H*H) étant identiques à celle du produit de la matrice de canal avec son transconjugué (HH*), ledit au moins un vecteur propre ($u_i$) du produit du transconjugué de la matrice de canal par la matrice de canal (H*H) est obtenu en effectuant le produit du vecteur propre ($v_i$) associé à la au moins une valeur propre extraite du produit de la matrice de canal par son transconjugué (HH*) avec le transconjugué (H*) de la matrice de canal.

3. Procédé de traitement d'informations représentatives d'un canal de transmission selon la revendication **2**, **caractérisé en ce que** l'étape ($R_1$) d'extraction des valeurs propres du produit de la matrice de canal par son transconjugué (HH*) extrait ladite au moins une valeur propre selon un ordre de valeurs décroissantes et comprend les sous-étapes suivantes :

- Extraction ($R_{11}$) d'un couple ($\lambda_1$, $v_1$) comprenant la valeur propre ($\lambda_1$) de plus grande amplitude et son vecteur propre associé par itérations successives du produit de la matrice (HH*) avec un vecteur v initial de dimension r, les itérations étant répétées jusqu'à ce qu'il y ait convergence vers une direction propre du canal de transmission ;
- Obtention ($R_{15}$) d'une nouvelle matrice (HH*)$_1$ par soustraction d'un produit du couple extrait au produit de la matrice de canal par son transconjugué (HH*) ;

et **en ce que** lesdites sous-étapes sont répétées, tant qu'un critère d'arrêt prédéterminé n'est pas satisfait

4. Procédé de traitement d'informations représentatives d'un canal de transmission selon la revendication **2**, **caractérisé en ce que** l'étape ($R_1$) d'extraction de valeurs propres du produit de la matrice de canal par son transconjugué (HH*) extrait les valeurs propres selon un ordre de valeurs décroissantes et comprend les sous-étapes suivantes :

- Calcul itératif ($R'_{10}$) d'au moins une puissance géométrique de la matrice produit de la matrice de canal par son transconjugué ($HH*$)$^{2^n}$, le nombre d'itérations étant fonction d'un critère de convergence prédéterminé ;
- Extraction ($R'_{11}$) d'un couple ($\lambda_1$, $v_1$) comprenant la valeur propre ($\lambda_1$) de plus grande amplitude et son vecteur propre associé par produit de la au moins une puissance géométrique calculée ($HH*$)$^{2^n}$ avec un vecteur initial de dimension (r).
- Obtention ($R_{15}$) d'une nouvelle matrice (HH*)$_1$ par soustraction d'un produit du couple extrait au produit de la matrice de canal par son transconjugué (HH*) ;

et **en ce que** lesdites sous-étapes sont répétées, tant qu'un critère d'arrêt ($R_{14}$) prédéterminé n'est pas satisfait.

5. Procédé de traitement d'informations représentatives d'un canal de transmission selon l'une des revendications **2** à **4**, **caractérisé en ce qu'**il comprend en outre une sous-étape d'évaluation ($R_{12}$) d'un gain de capacité ($G_C$) associé à une $n^{ème}$ valeur propre extrait à partir d'un rapport entre une première capacité de débit ($C_{n-1}$) associée aux n-1 valeurs propres précédentes et une deuxième capacité (Cn) associée aux n valeurs propres courantes, une sous-étape ($R_{13}$) de décision de prise en compte de la $n^{ème}$ valeur propre par comparaison du gain de capacité ($G_C$) calculé associé à la $n^{ème}$ valeur propre par rapport à un seuil prédéterminé ($S_C$).

6. Procédé de traitement d'informations représentatives d'un canal de transmission selon l'une des revendications **3** ou **4**, **caractérisé en ce que**, suite à une nouvelle estimation du canal de transmission (H), les étapes du procédé sont répétées et **en ce que** la sous-étape ($R_{11}$) d'extraction d'un $i^{ème}$ couple ($\lambda'_i$, $v_i$) prend comme vecteur initial le $i^{ème}$ vecteur propre $v_i$ extrait lors de la mise en oeuvre précédente du procédé.

7. Dispositif (100) de traitement d'informations représentatives d'un canal de transmission entre un équipement radio, dit récepteur (ER), comprenant une pluralité (r) d'antennes et au moins une antenne d'émission, et un équipement radio, dit émetteur (ET), comprenant une pluralité (t) d'antennes d'émission et au moins une antenne de réception, le nombre d'antennes d'émission (t) étant supérieur au nombre d'antennes de réception (r), lesdites informations comprenant une matrice (H) représentative du canal de transmission préalablement estimée à partir d'au moins un signal de données reçu, ledit dispositif comprenant une unité (GET) d'obtention d'au moins un couple de caractéristiques propres du produit du transconjugué de la matrice de canal avec la matrice de canal (H*H), comprenant des valeurs propres non nulles ($\lambda_i$) et des vecteurs propres ($u_i$) associés auxdites valeurs propres, **caractérisé en ce qu'**il comprend en outre les unités suivantes :

- Obtention (MEAS) d'une mesure d'un rapport signal à bruit dans le canal de transmission ;
- Calcul (CALC) d'au moins une valeur propre ($\mu_i$) d'une matrice d'autocorrélation des symboles à l'émission ($Q_{opt}$), selon un critère de maximisation d'une capacité (C) du canal de transmission, à partir des (p) valeurs propres ($\lambda_i$) obtenues, rangées selon un ordre décroissant et de la mesure ($\rho$) de rapport signal à bruit, selon les équations suivantes :

$$0 \leq p \leq argmax_{m \leq r} \, m^{-1} \left( 1 + (rt\rho)^{-1} \sum_{k \leq m} \lambda_k^{-1} \right) > \left( rt\rho\lambda_m \right)^{-1}$$

$$\mu_i = \frac{1}{p} \left( 1 + \sum_{j=1}^{p} \frac{1}{rt\rho\lambda_j} \right) - \frac{1}{rt\rho\lambda_i}$$

pour $1 \leq i \leq p$

$$\mu_i = 0,$$

*pour $p < i \leq t$* la valeur propre ($\mu_i$) non nulle de la matrice d'autocorrélation ($Q_{opt}$) étant associée au même vecteur propre ($u_i$) que la valeur propre ($\lambda_i$) du produit du transconjugué de la matrice de canal avec la matrice de canal (H*H) ; et
- Transmission (SEND) à l'équipement émetteur (ET) d'informations représentatives de ladite au moins une valeur propre non nulle ($\mu_i$) calculée associé au vecteur propre ($u_i$).

8. Equipement de communication radio, dit récepteur (ER), comprenant une pluralité d'antennes de réception et au moins une antenne d'émission, **caractérisé en ce qu'**il comprend un dispositif (100) de traitement d'informations représentatives d'un canal de transmission (CH) selon la revendication **7**.

9. Programme d'ordinateur ($Pg_1$) comprenant des instructions qui mettent en oeuvre le procédé de traitement d'un signal de donnée reçu selon l'une des revendications **1** à **6**, lorsqu'il est exécuté par un processeur.

**Patentansprüche**

1. Verfahren zum Verarbeiten von Informationen, die für einen Übertragungskanal zwischen einem Funkgerät, das Empfänger (ER) genannt wird, umfassend eine Vielzahl (r) von Empfangsantennen und mindestens eine Sendeantenne, und einem Funkgerät, das Sender (ET) genannt wird, umfassend eine Vielzahl (t) von Sendeantennen und mindestens eine Empfangsantenne, repräsentativ sind, wobei die Anzahl von Sendeantennen (t) größer als die Anzahl von Empfangsantennen (r) ist, wobei die Informationen eine Matrix (H) aufweisen, die für den Übertragungskanal (CH) repräsentativ ist, die zuvor ausgehend von mindestens einem empfangenen Datensignal geschätzt wird, wobei das Verfahren einen Schritt ($R_2$) zum Erhalten von mindestens einem Paar Eigenmerkmale des Produktes der Transkonjugierten der Kanalmatrix mit der Kanalmatrix (H*H) aufweist, umfassend Eigenwerte ungleich Null ($\lambda_i$) und Eigenvektoren ($u_i$), die mit den Eigenwerten verbunden werden, **dadurch gekennzeichnet, dass** es ferner die folgenden Schritte aufweist:

- Erhalten ($R_3$) einer Messung eines Signal-Rausch-Verhältnisses in dem Übertragungskanal,
- Berechnen ($R_4$) eines Eigenwertes ($\mu_i$) einer Autokorrelationsmatrix der Symbole beim Senden ($Q_{opt}$) nach einem Maximierungskriterium einer Kapazität (C) des Übertragungskanals ausgehend von den erhaltenen Eigenwerten ($\lambda_i$), die in absteigender Reihenfolge geordnet sind, und der Messung (p) des Signal-Rausch-Verhältnisses nach den folgenden Gleichungen:

$$0 \leq p \leq argmax_{m \leq r} \, m^{-1} \left( 1 + (rt\rho)^{-1} \sum_{k \leq m} \lambda_k^{-1} \right) > \left( rt\rho\lambda_m \right)^{-1}$$

$$\mu_i = \frac{1}{p} \left( 1 + \sum_{j=1}^{p} \frac{1}{rt\rho\lambda_j} \right) - \frac{1}{rt\rho\lambda_i}$$

für $1 \leq i \leq p$

$$\mu_i = 0,$$

für $p < i \le t$ wobei p die Anzahl der berechneten Eigenwerte ist,
wobei der Eigenwert ($\mu_i$) ungleich Null der Autokorrelationsmatrix ($Q_{opt}$) mit dem gleichen Eigenvektor ($u_i$) verbunden wird wie der Eigenwert ($\lambda_i$) des Produktes der Transkonjugierten der Kanalmatrix mit der Kanalmatrix (H*H),

- Übertragen ($R_5$) von Informationen an das Sendegerät, die für mindestens einen berechneten Eigenwert ungleich Null ($\mu_i$) repräsentativ sind, der mit dem Eigenvektor ($u_i$) verbunden wird.

**2.** Verfahren zum Verarbeiten von Informationen, die für einen Übertragungskanal repräsentativ sind, nach Anspruch 1, **dadurch gekennzeichnet, dass** es ferner einen Schritt ($R_1$) des Extrahierens von mindestens einem Paar Eigenmerkmale des Produktes der Kanalmatrix mit der Transkonjugierten der Kanalmatrix ausgehend von der geschätzten Kanalmatrix aufweist, wobei das mindestens eine Paar mindestens einen Eigenwert ungleich Null ($\lambda_i$) und einen verbundenen Eigenvektor ($v_i$) aufweist, und dadurch, dass die Eigenwerte ungleich Null des Produktes der Transkonjugierten der Kanalmatrix mit der Kanalmatrix (H*H) identisch mit jenem des Produktes der Kanalmatrix mit ihrer Transkonjugierten (HH*) sind, wobei der mindestens eine Eigenvektor ($u_i$) des Produktes der Transkonjugierten der Kanalmatrix mit der Kanalmatrix (H*H) erhalten wird, indem das Produkt des Eigenvektors ($v_i$), der mit dem mindestens einem Eigenwert verbunden wird, der aus dem Produkt der Kanalmatrix mit ihrer Transkonjugierten (HH*) extrahiert wird, mit der Transkonjugierten (H*) der Kanalmatrix erstellt wird.

**3.** Verfahren zum Verarbeiten von Informationen, die für einen Übertragungskanal repräsentativ sind, nach Anspruch 2, **dadurch gekennzeichnet, dass** der Schritt ($R_1$) des Extrahierens der Eigenwerte des Produktes der Kanalmatrix mit ihrer Transkonjugierten (HH*) den mindestens einen Eigenwert nach einer abnehmenden Wertereihenfolge extrahiert und die folgenden Unterschritte aufweist:

- Extrahieren ($R_{11}$) eines Paares ($\lambda_1$, $v_1$) , umfassend den Eigenwert ($\lambda_1$) mit größerer Amplitude und seinen verbunden Eigenvektor, durch aufeinanderfolgende Iterationen des Produktes der Matrix (HH*) mit einem Anfangsvektor v der Dimension r, wobei die Iterationen wiederholt werden, bis es eine Konvergenz zu einer Eigenrichtung des Übertragungskanals gibt,
- Erhalten ($R_{15}$) einer neuen Matrix $(HH^*)_1$ durch Subtrahieren eines Produktes des extrahierten Paares von dem Produkt der Kanalmatrix mit ihrer Transkonjugierten (HH*),

und dadurch, dass die Unterschritte wiederholt werden, bis ein vorbestimmtes Abbruchkriterium erfüllt wird.

**4.** Verfahren zum Verarbeiten von Informationen, die für einen Übertragungskanal repräsentativ sind, nach Anspruch 2, **dadurch gekennzeichnet, dass** der Schritt ($R_1$) des Extrahierens der Eigenwerte des Produktes der Kanalmatrix mit ihrer Transkonjugierten (HH*) die Eigenwerte nach einer abnehmenden Wertereihenfolge extrahiert und die folgenden Unterschritte aufweist:

- iteratives Berechnen ($R'_{10}$) von mindestens einer Geometrieleistung der Matrix als Produkt der Kanalmatrix mit ihrer Transkonjugierten ($HH*)^{2n}$, wobei die Anzahl der Iterationen von einem vorbestimmten Konvergenzkriterium abhängig ist,
- Extrahieren ($R'_{11}$) eines Paares ($\lambda_1$, $v_1$), umfassend den Eigenwert ($\lambda_1$) mit größerer Amplitude und seinen verbunden Eigenvektor, durch das Produkt der mindestens einen berechneten Geometrieleistung ($HH*)^{2n}$ mit einem Anfangsvektor der Dimension (r),
- Erhalten ($R_{15}$) einer neuen Matrix $(HH^*)_1$ durch Subtrahieren eines Produktes des extrahierten Paares von dem Produkt der Kanalmatrix mit ihrer Transkonjugierten (HH*),

und dadurch, dass die Unterschritte wiederholt werden, bis ein vorbestimmtes Abbruchkriterium ($R_{14}$) erfüllt wird.

**5.** Verfahren zum Verarbeiten von Informationen, die für einen Übertragungskanal repräsentativ sind, nach einem der Ansprüche 2 bis 4, **dadurch gekennzeichnet, dass** es ferner einen Unterschritt des Bewertens ($R_{12}$) eines Kapazitätsgewinns ($G_C$), der mit einem n-ten Eigenwert verbunden wird, der ausgehend von einem Verhältnis zwischen einer ersten Durchsatzkapazität ($C_{n-1}$), die mit den n-1 vorhergehenden Eigenwerten verbunden wird, und einer zweiten Kapazität ($C_n$), die mit n aktuellen Eigenwerten verbunden wird, extrahiert wird, einen Unterschritt ($R_{13}$) des Entscheidens des Berücksichtigens des n-ten Eigenwertes durch Vergleichen des berechneten Kapazitätsgewinns ($G_C$), der mit dem n-ten Eigenwert verbunden wird, mit einem vorbestimmter Schwellenwert ($S_C$), aufweist.

**6.** Verfahren zum Verarbeiten von Informationen, die für einen Übertragungskanal repräsentativ sind, nach einem der Ansprüche 3 oder 4, **dadurch gekennzeichnet, dass** infolge von einer neuen Schätzung des Übertragungskanals (H) die Schritte des Verfahrens wiederholt werden und dadurch, dass der Unterschritt ($R_{11}$) des Extrahierens eines i-ten Paares ($\lambda'_i$, $v_i$) als Anfangsvektor den i-ten Eigenvektor $v_1$ nimmt, der beim vorhergehenden Umsetzen des Verfahrens extrahiert wird.

**7.** Vorrichtung (100) zum Verarbeiten von Informationen, die für einen Übertragungskanal zwischen einem Funkgerät, das Empfänger (ER) genannt wird, umfassend eine Vielzahl (r) von Antennen und mindestens eine Sendeantenne, und einem Funkgerät, das Sender (ET) genannt wird, umfassend eine Vielzahl (t) von Sendeantennen und mindestens eine Empfangsantenne, repräsentativ sind, wobei die Anzahl von Sendeantennen (t) größer als die Anzahl von Empfangsantennen (r) ist, wobei die Informationen eine Matrix (H) aufweisen, die für den Übertragungskanal repräsentativ ist, die zuvor ausgehend von mindestens einem empfangenen Datensignal geschätzt ist, wobei die Vorrichtung eine Einheit (GET) zum Erhalten von mindestens einem Paar Eigenmerkmale des Produktes der Transkonjugierten der Kanalmatrix mit der Kanalmatrix (H*H) aufweist, umfassend Eigenwerte ungleich Null ($\lambda_i$) und Eigenvektoren ($u_i$), die mit den Eigenwerten verbunden sind, **dadurch gekennzeichnet, dass** sie ferner die folgenden Einheiten aufweist:

- Erhalten (MEAS) einer Messung eines Signal-Rausch-Verhältnisses in dem Übertragungskanal,
- Berechnen (CALC) mindestens eines Eigenwertes ($\mu_i$) einer Autokorrelationsmatrix der Symbole beim Senden ($Q_{opt}$) nach einem Maximierungskriterium einer Kapazität (C) des Übertragungskanals ausgehend von den (p) erhaltenen Eigenwerten ($\lambda_i$), die in absteigender Reihenfolge geordnet sind, und der Messung (p) des Signal-Rausch-Verhältnisses nach den folgenden Gleichungen:

$$0 \leq p \leq argmax_{m \leq r}\, m^{-1}\left(1 + (rt\rho)^{-1}\sum_{k \leq m}\lambda_k^{-1}\right) > \left(rt\rho\lambda_m\right)^{-1}$$

$$\mu_i = \frac{1}{p}\left(1 + \sum_{j=1}^{p}\frac{1}{rt\rho\lambda_j}\right) - \frac{1}{rt\rho\lambda_i}$$

für $1 \leq i \leq p$

$$\mu_i = 0,$$

für $p < i \leq t$ wobei der Eigenwert ($\mu_i$) ungleich Null der Autokorrelationsmatrix ($Q_{opt}$) mit dem gleichen Eigenvektor ($u_i$) verbunden wird wie der Eigenwert ($\lambda_i$) des Produktes der Transkonjugierten der Kanalmatrix mit der Kanalmatrix (H*H), und
- Übertragen (SEND) von Informationen an das Sendegerät (ET), die für mindestens einen berechneten Eigenwert ungleich Null ($\mu_i$) repräsentativ sind, der mit dem Eigenvektor ($u_i$) verbunden ist.

**8.** Funkkommunikationsgerät, das Empfänger (ER) genannt wird, das eine Vielzahl von Empfangsantennen und mindestens eine Sendeantenne aufweist, **dadurch gekennzeichnet, dass** es eine Vorrichtung (100) zum Verarbeiten von Informationen, die für einen Übertragungskanal (CH) repräsentativ sind, nach Anspruch 7 aufweist.

**9.** Computerprogramm ($Pg_1$), das Anweisungen aufweist, die das Verfahren zum Verarbeiten eines empfangenen Datensignals nach einem der Ansprüche 1 bis 6 aufweist, wenn es von einem Prozessor ausgeführt wird.

**Claims**

**1.** A method for processing information representative of a transmission channel between a radio equipment, so-called receiver (ER), comprising a plurality (r) of receiving antennas and at least one transmitting antenna, and a radio equipment, so-called transmitter (ET) comprising a plurality (t) of transmission antennas and at least one receiving antenna, the number of transmission antennas (t) being greater than the number of receiving antennas (r), said information comprising a matrix (H) representative of the transmission channel (CH) estimated beforehand from at least one received data signal, said method comprising a step ($R_2$) for obtaining at least one pair of eigencharacteristics of the product of the conjugate transpose of the channel matrix with the channel matrix (H*H), consisting of non-zero eigenvalues ($\lambda_i$) and eigenvectors ($u_i$) associated with said eigenvalues, **characterized in that** it further comprises the following steps:

- Obtaining ($R_3$) a measurement of a signal to noise ratio in the transmission channel;
- Calculation ($R_4$) at least one eigenvalue ($\mu_i$) of an autocorrelation matrix of symbols on transmission ($Q_{opt}$), according to a criterion of maximizing a capacity (C) of the transmission channel, from the eigenvalues ($\lambda_i$) obtained, arranged in descending order and the measurement (p) of the signal to noise ratio, according to the following equations:

$$0 \leq p \leq argmax_{m \leq r} m^{-1}\left(1 + (rt\rho)^{-1}\sum_{k \leq m}\lambda_k^{-1}\right) > \left(rt\rho\lambda_m\right)^{-1}$$

$$\mu_i = \frac{1}{p}\left(1 + \Sigma_{j=1}^{p}\frac{1}{rt\rho\lambda_j}\right) - \frac{1}{rt\rho\lambda_i}$$

For $1 \leq i \leq$ p

$$\mu_i = 0,$$

for $p < i \leq t$ p being the number of calculated eigenvalues,
the non-zero eigenvalue ($\mu_i$) of the autocorrelation matrix ($Q_{opt}$) being associated with the same eigenvector ($u_i$) as the eigenvalue ($\lambda_i$) of the product of the conjugate transpose of the channel matrix with the channel matrix ($H^*H$);
- Transmitting ($R_5$), to the transmitter equipment, information representative of said at least one calculated non-zero eigenvalue ($\mu_i$) associated with the eigenvector ($u_i$).

2. The method for processing information representative of a transmission channel according to claim **1**, **characterized in that** it further comprises a step ($R_1$) of extracting at least one pair of eigencharacteristics of the product of said matrix channel with the conjugate transpose of the channel matrix from the estimated channel matrix, said at least one pair comprising at least one non-zero eigenvalue ($\lambda_i$) and an associated eigenvector ($v_i$) and, **in that** the non-zero eigenvalues of the product of the conjugate transpose of the channel matrix by the channel matrix ($H^*H$) being identical to that of the product of the channel matrix with its conjugate transpose ($HH^*$), the at least one eigenvector ($u_i$) of the product of the conjugate transpose of the channel matrix by the channel matrix ($H^*H$) is obtained by performing the product of the eigenvector ($v_i$) associated with the at least one eigenvalue extracted from the product of the channel matrix by its conjugate transpose ($HH^*$) with the conjugate transpose ($H^*$) of the channel matrix.

3. The method for processing information representative of a transmission channel according to claim **2**, **characterized in that** the step ($R_1$) of extracting the eigenvalues of the product of the channel matrix by its conjugate transpose ($HH^*$) extracts said at least one eigenvalue in order of decreasing values and comprises the following substeps:

- Extracting ($R_{11}$) a pair ($\lambda_1$, $v_1$) comprising the eigenvalue ($\lambda_1$) with greater amplitude and its associated eigenvector by successive iterations of the product of the matrix ($HH^*$) with an initial vector v of dimension r, said iterations being repeated until there is convergence towards a eigen direction of the transmission channel;
- Obtaining ($R_{15}$) a new matrix ($HH^*$)$_1$ by subtracting a product of the pair extracted from the product of the channel matrix by its conjugate transpose ($HH^*$);

and **in that** said substeps are repeated as long as a predetermined stopping criterion is not satisfied.

4. The method for processing information representative of a transmission channel according to claim **2**, **characterized in that** the step ($R_1$) of extracting the eigenvalues of the product of the channel matrix by its conjugate transpose ($HH^*$) extracts the eigenvalues in order of decreasing values and comprises the following substeps:

- Iterative calculation ($R'_{10}$) of at least one geometrical power of the matrix that is the product of the channel matrix with its conjugate transpose ($HH^*$)$^{2n}$, the number of iterations being based on a predetermined convergence criterion;
- Extracting ($R'_{11}$) a pair ($\lambda_1$, $v_1$) comprising the eigenvalue ($\lambda_1$) with greater amplitude and its associated eigenvector by the product of at least one calculated geometric power ($HH^*$)$^{2n}$ with an initial vector of dimension

(r).

- Obtaining ($R_{15}$) a new matrix $(HH^*)_1$ by subtracting a product of the extracted pair from the product of the channel matrix by its conjugate transpose ($HH^*$);

and **in that** said substeps are repeated as long as a predetermined stopping criterion ($R_{14}$) is not satisfied.

**5.** The method for processing information representative of a transmission channel according to any one of claims **2** to **4**, **characterized in that** it further comprises a sub-step of evaluating ($R_{12}$) a capacity gain ($G_C$) associated with an $n^{th}$ eigenvalue extracted from a ratio between a first flowrate capacity ($C_{n-1}$) associated with the n-1 preceding eigenvalues and a second capacity ($Cn$) associated with the n current eigenvalues, a substep ($R_{13}$) of deciding to take into account the $n^{th}$ eigenvalue by comparing the calculated capacity gain ($G_C$) associated with the $n^{th}$ eigenvalue with respect to a predetermined threshold ($S_C$).

**6.** The method for processing information representative of a transmission channel according to one of claims **3** or **4**, **characterized in that**, following a new estimate of the transmission channel (H), the steps of the method are repeated and **in that** the substep ($R_{11}$) of extracting an $i^{th}$ pair ($\lambda'_i$, $v_i$) takes as the initial vector the $i^{th}$ eigenvector $v_i$ extracted during the previous implementation of the method.

**7.** A device (100) for processing information representative of a transmission channel between a radio equipment, so-called receiver (ER) comprising a plurality (r) of antennas and at least one transmitting antenna, and a radio equipment, so-called transmitter (ET) comprising a plurality (t) of transmission antennas and at least one receiving antenna, the number of transmitting antennas (t) being greater than the number of receiving antennas (r), said information comprising a matrix (H) representative of the transmission channel estimated beforehand from at least one received data signal, said method comprising a unit (GET) for obtaining at least one pair of eigencharacteristics of the product of the conjugate transpose of the channel matrix with the channel matrix ($H^*H$), consisting of non-zero eigenvalues ($\lambda_i$) and eigenvectors (ui) associated with said eigenvalues, **characterized in that** it further comprises the following units:

- Obtaining (MEAS) a measurement of a signal to noise ratio in the transmission channel;
- Calculating (CALC) at least one eigenvalue ($\mu_i$) of a autocorrelation matrix of symbols on transmission (Qopt), according to a criterion of maximizing a capacity (C) of the transmission channel, from the eigenvalues ($\lambda_i$) obtained, arranged in descending order and the measurement ($\rho$) of the signal to noise ratio, according to the following equations:

$$0 \le p \le argmax_{m \le r}\, m^{-1}\left(1 + (rt\rho)^{-1}\sum_{k \le m}\lambda_k^{-1}\right) > \left(rt\rho\lambda_m\right)^{-1}$$

$$\mu_i = \frac{1}{p}\left(1 + \sum_{j=1}^{p}\frac{1}{rt\rho\lambda_j}\right) - \frac{1}{rt\rho\lambda_i}$$

for $1 \le i \le$ p

$$\mu_i = 0,$$

*for p < i $\le$ t* the non-zero eigenvalue ($\mu_i$) of the autocorrelation matrix ($Q_{opt}$) being associated with the same eigenvector (u$_i$) as the eigenvalue ($\lambda_i$) of the product of the conjugate transpose of the channel matrix with the channel matrix ($H^*H$);
- Transmitting (SEND), to the transmitter equipment (ET) information representative of said at least one calculated non-zero eigenvalue ($\mu_i$) associated with the eigenvector (u$_i$).

**8.** A radio communication equipment, so-called receiver (ER) comprising a plurality of receiving antennas and at least one transmitting antenna, **characterized in that** it comprises a device (100) for processing information representative of a transmission channel (CH) according to claim **7**.

**9.** A computer program ($Pg_1$) comprising instructions that implement the method for processing a data signal received according to one of claims **1** to **6**, when executed by a processor.

FIG. 1

FIG. 2A

FIG. 2B

FIG. 3

DS      H

MEAS PSNR   R3

R1   EXTRACT $\lambda_j$, $v_j$

$\rho$     $\rho$

R2   GET $\lambda_j$, $u_j$

R4   CALC $\mu_{i,}$

R5   SEND FS

FIG. 4

| IRμ1 | IRu1 | IRμ2 | IRu2 | ... | ... | IRμp | IRup |
|------|------|------|------|-----|-----|------|------|

FS

$p \leq r$

FIG. 5

FIG. 6

FIG. 7A

FIG. 7B

T1 — DEC' FS

T2 — GET (μi, ui)

R

T3 — CONF MIMO

## FIG. 8A

p (μi, ui)

T31 — GEN p F

T32 — DET MUX

T33 — ALLOC P  $\sqrt{\mu_i}$

T34 — DET CONTRIB(Fi,Aj)  $uij$

## FIG. 8B

FIG. 9

ER, TU

FIG. 10

FIG. 11

**EP 3 329 609 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A simple transmit diversity technique for wireless communications. *IEEE Journal on Selected Areas in Communications,* Octobre 1998, vol. 16 (8), 1451-1458
- **LEE et al.** MIMO technologies in 3GPP LTE and LTE-advanced. *EURASIP Journal on Wireless Communications and Networking,* 2009
- **A. WIESEL ; Y. C. ELDAR ; S. SHAMAI (SHITZ.** Zero-forcing precoding and generalized inverses. *proceedings de la conférence IEEE Trans. on Sig. Proc.,* Septembre 2008, vol. 56 (9), 4409-4418
- **B. C BANISTER et al.** Feedback Assisted Transmission Subspace Tracking for MIMO systems. *la revue IEEE J. Select. Areas Commun.,* Avril 2003, vol. 21 (3), 452-463
- **V. LAU et al.** On the Design of MIMO Block-Fading Channels With Feedback-Link Capacity Constraint. *la revue IEEE Transactions on Communications,* Janvier 2004, vol. 52
- **H. WANG et al.** On the Design of Hybrid Limited Feedback for Massive MIMO Systems. *les proceedings de la conférence IEEE ICC Wireless Communications Symposium,* 2014
- **ROGER A. HORN ; CHARLES R. JOHNSON.** l'ouvrage Matrix Analysis. Cambridge University Press, 1990, 53
- **D.J.H. GARLING.** *Inequalities : a journey into Linear Algebra,* 2007, 233
- **E. TELATAR.** Capacity of Multi-antenna Gaussian Channels. *European Transactions on Télécommunications,* Novembre 1999, vol. 10 (6), 585-595